(19) Europäisches Patentamt
European Patent Office
Office européen des brevets

(11) EP 4 632 863 A1

(12) **EUROPEAN PATENT APPLICATION**
published in accordance with Art. 153(4) EPC

(43) Date of publication:
**15.10.2025 Bulletin 2025/42**

(21) Application number: **23899870.2**

(22) Date of filing: **30.11.2023**

(51) International Patent Classification (IPC):
***H01M 10/0567*** *(2010.01)* ***C07F 5/02*** *(2006.01)*

(52) Cooperative Patent Classification (CPC):
**C07F 5/02; H01M 10/0567**

(86) International application number:
**PCT/CN2023/135345**

(87) International publication number:
**WO 2024/120291 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 CN 202211583064**
**19.07.2023 CN 202310883584**
**19.07.2023 CN 202310883885**

(71) Applicants:
- **Zhejiang Lantian Environmental Protection Hi-Tech Co., Ltd.**
  **Hangzhou, Zhejiang 310018 (CN)**
- **Zhejiang Research Institute of Chemical Industry Co., Ltd.**
  **Hangzhou, Zhejiang 310023 (CN)**
- **Sinochem Lantian Co., Ltd.**
  **Hangzhou, Zhejiang 310051 (CN)**

(72) Inventors:
- **MA, Guoqiang**
  **Hangzhou, Zhejiang 310018 (CN)**
- **JIANG, Zhimin**
  **Hangzhou, Zhejiang 310018 (CN)**
- **XU, Chong**
  **Hangzhou, Zhejiang 310018 (CN)**
- **FU, Chaopeng**
  **Hangzhou, Zhejiang 310018 (CN)**
- **JIANG, Yiyi**
  **Hangzhou, Zhejiang 310018 (CN)**
- **YU, Quanfeng**
  **Hangzhou, Zhejiang 310018 (CN)**
- **SHEN, Min**
  **Hangzhou, Zhejiang 310018 (CN)**

(74) Representative: **Meyer-Dulheuer MD Legal Patentanwälte PartG mbB**
**Hanauer Landstr. 287-289**
**60314 Frankfurt am Main (DE)**

(54) **USE OF PYROSULFATE-BORON TRIFLUORIDE COMPOSITE METAL SALT IN ELECTROLYTE SOLUTION, AND PREPARATION METHOD THEREFOR**

(57) Use of a pyrosulfate-boron trifluoride composite metal salt in an electrolyte solution. The addition of a pyrosulfate-boron trifluoride composite metal salt having at least one structure to an electrolyte solution at an addition amount of 0.1 wt% to 15.0 wt% can simultaneously improve the cycling performance, high-temperature storage performance, and low-temperature performance of a battery. The pyrosulfate-boron trifluoride composite metal salt is obtained by means of the reaction of a pyrosulfate and boron trifluoride gas or a boron trifluoride complex. When a pyrosulfate with a content of $SO_3 \leq 500$ ppm is used as a raw material, a clear, transparent and low-chromaticity pyrosulfate-boron trifluoride composite metal salt can be prepared; and when the composite metal salt is applied to an electrolyte solution, the color change problem during long-time storage is mitigated, and the high-temperature performance of the battery is also further improved. A pyrosulfate-boron trifluoride composite lithium salt is further applied to a lithium-ion secondary battery including a negative electrode containing an active material with a specific surface area of 0.1 $m^2/g$ to 20 $m^2/g$, such that a low-impedance lithium-ion migration channel is constructed by means of the interaction effect of the electrolyte solution and the negative electrode material, and the quick charging and low-temperature performance of the battery is further improved.

EP 4 632 863 A1

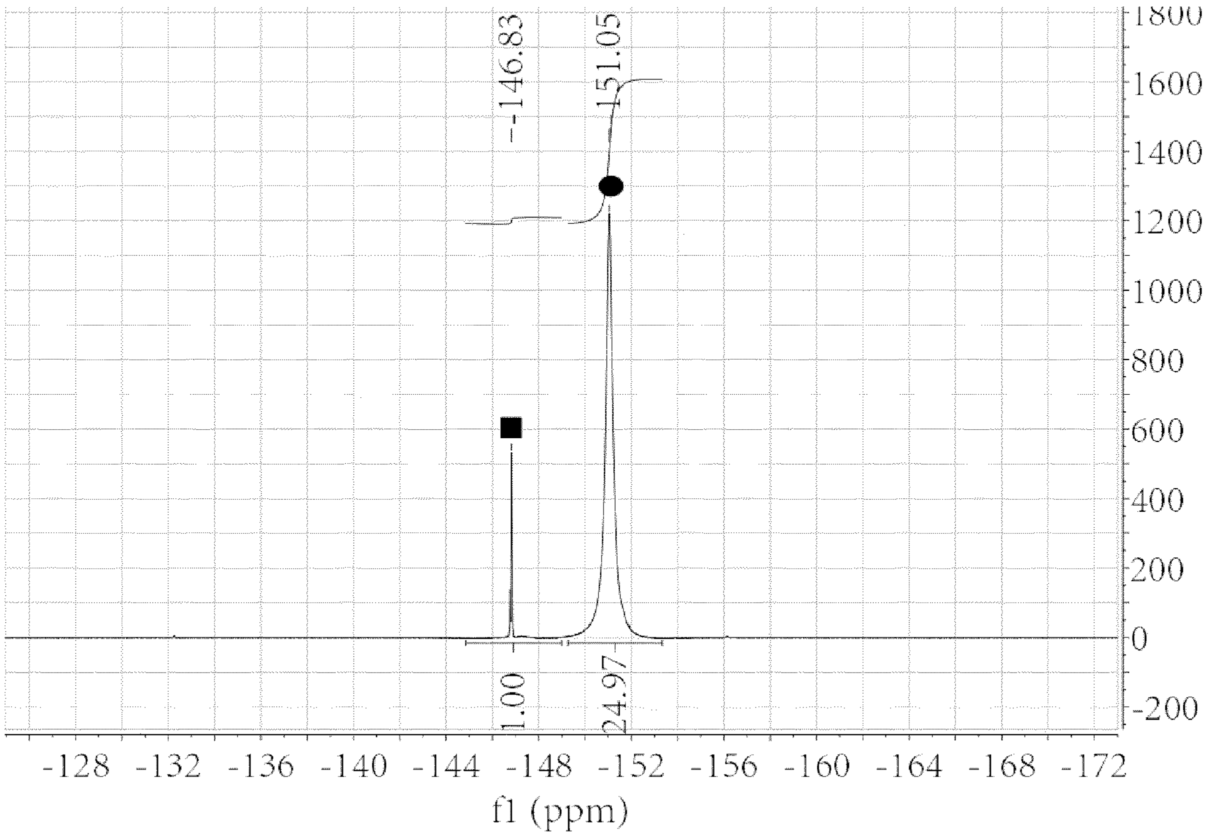
-146.83
-151.05
1800
1600
1400
1200
1000
800
600
400
200
0
-200
1.00
24.97
-128 -132 -136 -140 -144 -148 -152 -156 -160 -164 -168 -172
f1 (ppm)

FIG. 1

## Description

### TECHNICAL FIELD

The present invention relates to the field of electrolyte solution of lithium battery or sodium battery, in particular, to the use of a novel compound pyrosulfate-boron trifluoride composite metal salt (a pyrosulfate-boron trifluoride composite lithium salt or a pyrosulfate-boron trifluoride composite sodium salt) in an electrolyte solution and a method for preparing the same.

### BACKGROUND

As an integral part of a battery, electrolyte solution additives are mainly responsible for building a stable electrode/electrolyte solution interfacial membrane to achieve the goal of electronic insulation and lithium-ion/sodium ion transmission. Under the influence of different functional groups in the electrolyte solution additives, a composition and a structure of the battery interfacial membrane may change, resulting in affecting performances such as a cycle life of a battery, a high-temperature storage performance, a low-temperature discharge performance and the like.

With an increasing demand for battery volumetric energy density, improving battery operating voltage and developing high-voltage electrolyte solutions are the mainstream methods currently. However, high voltages may lead to a degradation of various electrochemical properties of the battery, which puts higher demands on performances of the electrolyte solution additives. Furthermore, in order to simultaneously meet requirements of the performances of the battery in both high temperature environment and low-temperature environment, the electrolyte solution is required to have both excellent high temperature performances and low-temperature performances. At present, most electrolyte solution additives only have good high temperature performances or good low-temperature performances. In order provide an electrolyte solution with both good high temperature performance and good low-temperature performance at the same time, a complementary approach is often adopted in practical use, i.e., adding high temperature additives and low-temperature additives simultaneously in an electrolyte solution. However, the addition of multiple electrolyte solution additives is often cumbersome. In addition, each of the plurality of electrolyte solution additives may affect the performance of the electrolyte solution. Moreover, other additives are required to be added into the electrolyte solution to make up an interaction effect between the plurality of electrolyte solution additives. Therefore, the development of new metal salt products that simultaneously has good high temperature performance and good low-temperature performance is an important direction in electrolyte solution research.

The pyrosulfate-boron trifluoride composite lithium salt is a new type of electrolyte additive developed by Zhejiang Chemical Industry Research Institute Co., Ltd., which has both good high temperature performance and good low-temperature performance. Chinese patent No.CN202211375099.4 discloses a method for preparing lithium pyrosulfate, wherein disilyl sulfate and lithium hexafluorophosphate are used as raw materials. Subsequently, Chinese patent No. CN202211583064.X discloses a method for preparing the pyrosulfate-boron trifluoride composite lithium salt with the lithium pyrosulfate and boron trifluoride gas or boron trifluoride complex as raw materials. The above electrolyte solution additives may simultaneously improve a cycling performance, a high-temperature storage performance, and a low-temperature performance of the battery.

### SUMMARY

In order to solve the problem above, in a first aspect, the present invention provides a use a pyrosulfate-boron trifluoride composite metal salt in an electrolyte solution, so as to improve a low-temperature performance of the battery while improving a cycle performance of the battery and a high-temperature storage performance of the battery.

An object of the first aspect of the present invention is achieved by a following technical solution.

A use of a pyrosulfate-boron trifluoride composite metal salt in an electrolyte solution, including: adding the pyrosulfate-boron trifluoride composite metal salt as shown in either or both of formula (I) and formula (II) into the electrolyte solution:

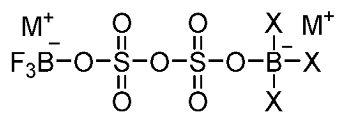

formula (I),

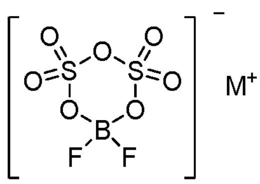

formula (II),

in formula (I), M is selected from Li or Na; X is independently selected from F or a substituent group as shown in formula (A):

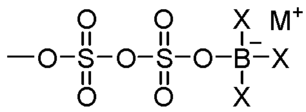

formula (A),

in formula (A), M is selected from Li or Na, X is independently selected from F or formula (A), until X is F;
a mass percent of the pyrosulfate-boron trifluoride composite metal salt in the electrolyte solution is in a range of 0.1 wt% to 15.0 wt%. In some embodiments, the mass percent of the pyrosulfate-boron trifluoride composite metal salt in the electrolyte solution is in a range of 0.2 wt% to 3.0 wt%.

In the formula as shown in formula (I), when two substituent groups X of the three substituent groups X substituted on atom B are F atoms, and the end substituent group X of the three substituent groups X is a substituent group as shown in formula (A), in the same way, two substituent groups of the three substituent groups substituted on atom B are F atoms and the end substituent group X of the three substituent groups X is substituted with the substituent group as shown in formula (A) again. In this way, a structure of the pyrosulfate-boron trifluoride composite metal salt can be shown as:

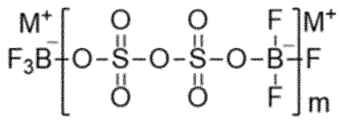
,

wherein M is also Li or Na; m is selected from an integer in a range of 1 to 100. In some embodiments, m is selected from an integer in a range of 1 to 50.

In some embodiments, the pyrosulfate-boron trifluoride composite metal salt is selected from at least one of

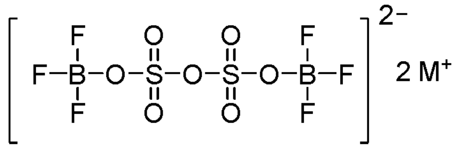
,

compound (1)

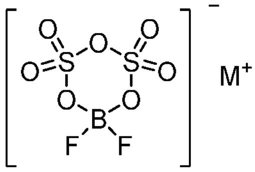
,

compound (2)

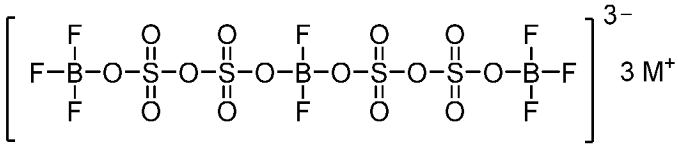

,

compound (3)

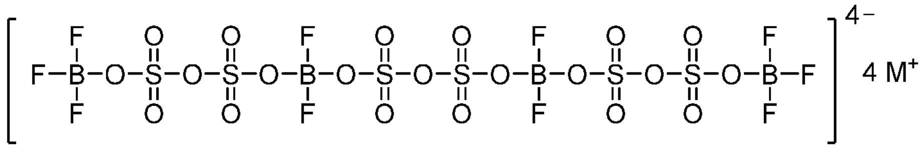

,

compound (4)

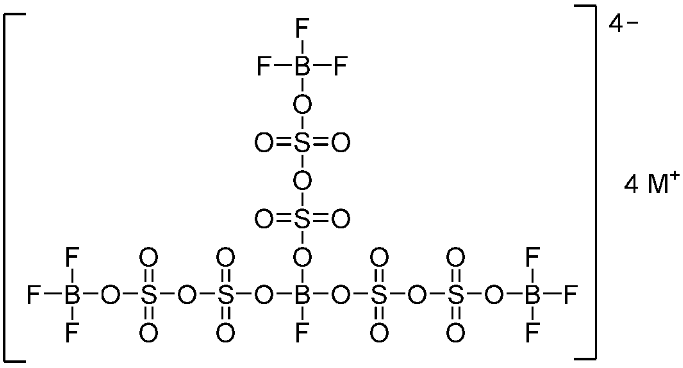

or

compound (5)

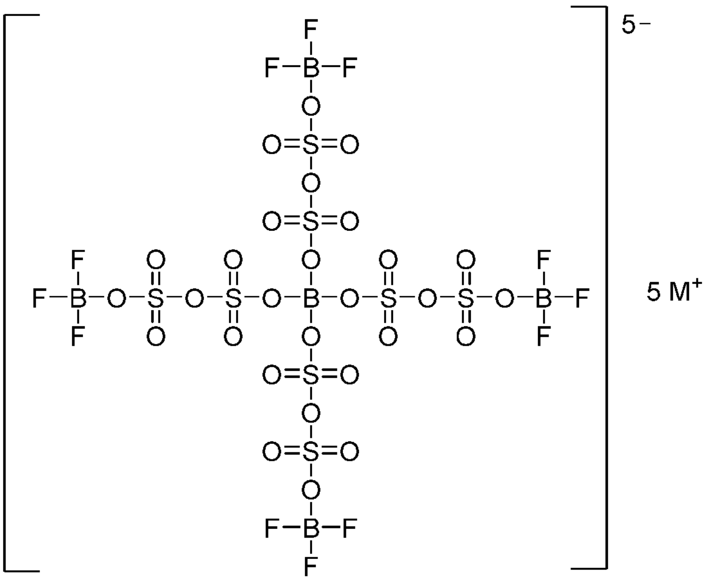

,

compound (6)

wherein M is selected from Li or Na.

When the pyrosulfate-boron trifluoride composite metal salt of the present invention is added into the electrolyte solution, a character of the pyrosulfate that can improve anti-oxidant performance of the electrolyte solution can be maintained, and a cycle performance of the cell at normal-temperature/high-temperature can be improved; in addition, the -S-O-B groups in the structure of the pyrosulfate-boron trifluoride composite metal salt can from a cross-linked interface

membrane containing S and B on an interface of the electrode in the process of charging and discharging, so as to reduce a content of inorganic salts such as $M_2SO_4$, $M_2SO_3$ and the like in the interface membrane and effectively reduce an internal resistance of the cell; moreover, the cross-linked interface membrane includes more holes configured for transferring $Li^+$ or $Na^+$, an ionic conductivity of the cell can be improved, and a low-temperature performance of the cell can be obviously improved. In this way, when the pyrosulfate-boron trifluoride composite metal salt is used in the electrolyte solution, the high-temperature performance of the cell and the low-temperature performance of the cell can be improved at the same time.

The pyrosulfate-boron trifluoride composite metal salt is obtained by following steps: subjecting lithium pyrosulfate/sodium pyrosulfate to react with either or both of boron trifluoride gas and boron trifluoride complex to obtain a reaction liquid of the pyrosulfate-boron trifluoride composite metal salt in a solvent. The lithium pyrosulfate/sodium pyrosulfate represents lithium pyrosulfate or sodium pyrosulfate.

The solvent is selected from the group consisting of vinyl carbonate, propylene carbonate, dimethyl carbonate, ethylmethyl carbonate, diethyl carbonate, methyl acetate, ethyl acetate, methyl propionate, γ-butyrolactone, diethyl ether, ethylene glycol dimethyl ether, acetonitrile, phenyl acetonitrile, propionitrile, and any combination thereof. In consideration of use of the pyrosulfate-boron trifluoride composite metal salt in the electrolyte solution, the solvent is optionally a common solvent generally used in the electrolyte solution. For example, the solvent is selected from the group consisting of dimethyl carbonate, ethylmethyl carbonate, diethyl carbonate, and any combination thereof.

The boron trifluoride reacts with lithium pyrosulfate or sodium pyrosulfate may be boron trifluoride gas or boron trifluoride complex. In some embodiments, the boron trifluoride complex is selected from the group consisting of boron trifluoride diethyl ether complex, boron trifluoride ethylene glycol dimethyl ether complex, boron trifluoride dimethyl carbonate complex, boron trifluoride pyridine complex, boron trifluoride ethylamine complex, boron trifluoride butyl ether complex, boron trifluoride methyl ether complex, boron trifluoride acetonitrile complex, boron trifluoride piperidine complex, boron trifluoride phenol complex, boron trifluoride tetrahydrofuran complex, boron trifluoride dimethyl sulfide complex, boron trifluoride morpholine complex, and any combination thereof. In some embodiments, the boron trifluoride complex is selected from the group consisting of boron trifluoride dimethyl carbonate complex, boron trifluoride diethyl ether complex, boron trifluoride acetonitrile complex, and any combination thereof.

In the reaction, a molar ratio of lithium pyrosulfate or sodium pyrosulfate to either or both of boron trifluoride gas and boron trifluoride complex is in a range of 0.2 : 1 to 1.2 : 1. In some embodiments, a molar ratio of lithium pyrosulfate or sodium pyrosulfate to either or both of boron trifluoride gas and boron trifluoride complex is in a range of 0.33 : 1 to 1.0 : 1.

A temperature of the reaction between lithium pyrosulfate or sodium pyrosulfate and either or both of boron trifluoride gas and boron trifluoride complex is in a range of 10 degrees centigrade to 90 degrees centigrade, and a time of the reaction between lithium pyrosulfate or sodium pyrosulfate and either or both of boron trifluoride gas and boron trifluoride complex is in a range of 1 h to 48 h. In some embodiments, a temperature of the reaction between lithium pyrosulfate or sodium pyrosulfate and either or both of boron trifluoride gas and boron trifluoride complex is in a range of 20 degrees centigrade to 50 degrees centigrade, and a time of the reaction between lithium pyrosulfate or sodium pyrosulfate and either or both of boron trifluoride gas and boron trifluoride complex is in a range of 5 h to 24 h.

The reaction liquid of the pyrosulfate-boron trifluoride composite metal salt obtained above includes the solvent and unreacted boron trifluoride, thus, the steps for obtaining the pyrosulfate-boron trifluoride composite metal salt further includes: removing the solvent and unreacted boron trifluoride in the reaction liquid of the pyrosulfate-boron trifluoride composite metal salt by method of atmospheric distillation or reduced pressure distillation to obtain the pyrosulfate-boron trifluoride composite metal salt.

When the temperature of the reaction between lithium pyrosulfate or sodium pyrosulfate and either or both of boron trifluoride gas and boron trifluoride complex is in a range of 10 degrees centigrade to 40°C, a mass percent of compound (2) in the pyrosulfate-boron trifluoride composite metal salt is greater than or equal to 50%, and at least one of the compound (1), compound (3), compound (4), compound (5) or compound (6) make up the rest. In some embodiments, the mass percent of compound (2) in the pyrosulfate-boron trifluoride composite metal salt is greater than or equal to 80%, and at least one of the compound (1), compound (3), compound (4), compound (5) or compound (6) makes up the rest. When the temperature of the reaction between lithium pyrosulfate or sodium pyrosulfate and either or both of boron trifluoride gas and boron trifluoride complex is in a range of 40 degrees centigrade to 90 degrees centigrade, a mass percent of compound (1) in the pyrosulfate-boron trifluoride composite metal salt is greater than or equal to 50%, and at least one of the compound (2), compound (3), compound (4), compound (5) or compound (6) makes up the rest. In some embodiments, the mass percent of compound (1) in the pyrosulfate-boron trifluoride composite metal salt is greater than or equal to 80%, and at least one of the compound (2), compound (3), compound (4), compound (5) or compound (6) make up the rest.

Due to solvent effect, the solvent cannot be removed completely by distillation. Thus, the pyrosulfate-boron trifluoride composite metal salt obtained after the distillation is a concentrated solution containing less than or equal to 60% of the reaction solvent by mass. When the solvent is a common solvent generally used in the electrolyte solution, the concentrated solution can be added into the electrolyte solution directly. When the solvent is not a common solvent

generally used in the electrolyte solution, a solvent of the electrolyte solution is added into the concentrated solution to obtain a resultant, and the resultant is subjected to atmospheric distillation or reduced pressure distillation to remove the reaction solvent and then added into the electrolyte solution.

The pyrosulfate-boron trifluoride composite metal salt obtained after the distillation was tested by method of nuclear magnetic resonance. When the reaction temperature is relatively low, a main product of the reaction is a cyclic compound. As the temperature rises, it is more likely to generate chain compounds. When the reaction temperature rises and the reaction time prolongs at the same time, a content of polymers in the products gradually rises, and polymers with branched chains may gradually be formed.

The electrolyte solution further includes:

a main salt, wherein the main salt is a main lithium salt or a main sodium salt, the main lithium salt is selected from the group consisting of lithium hexafluorophosphate, lithium tetrafluoroborate, lithium hexafluoroarsenate, lithium perchlorate, lithium bis(oxalate)borate, lithium difluoro(oxalate)borate, lithium bi(fluorosulfonyl)imide, lithium bis(trifluoromethylsulfonyl)imide, lithium tetrafluorooxalate phosphate, lithium trioxalate phosphate, lithium difluorobis(oxalato) phosphate, and any combination thereof; and the main sodium salt is selected from the group consisting of sodium hexafluorophosphate, sodium tetrafluoroborate, sodium perchlorate, sodium bi(fluorosulfonyl)imide, sodium bis(trifluoromethylsulfonyl)imide, sodium difluorophosphate, and any combination thereof; and a molar concentration of the main salt of the main salt is in a range of 0.1 mol/L to 4.0 mol/L.

an organic solvent, wherein the organic solvent is selected from the group consisting of $C_3$-$C_6$ carbonate compounds, $C_3$-$C_8$ carboxylic ester compounds, sulphone compounds, ether compounds, and any combination thereof; and

a fundamental additive, wherein the fundamental additive is selected from the group consisting of sulfonate ester compounds, sulfate ester compounds, fluorinated carbonate ester compounds, unsaturated carbonate ester compounds, fluorine-containing lithium salt, fluorine-containing sodium salt, and any combination thereof.

In some embodiments, the main lithium salt is selected from the group consisting of lithium hexafluorophosphate, lithium tetrafluoroborate, lithium bi(fluorosulfonyl)imide, lithium bis(trifluoromethylsulfonyl)imide, and any combination thereof; and a molar concentration of the main lithium salt in the electrolyte solution is in a range of 0.8 mol/L to 1.5 mol/L; and the main sodium salt is selected from the group consisting of sodium hexafluorophosphate, sodium bi(fluorosulfonyl) imide, sodium bis(trifluoromethylsulfonyl)imide, and any combination thereof; and a molar concentration of the main sodium salt in the electrolyte solution is in a range of 0.8 mol/L to1.5 mol/L.

The organic solvent is selected from the group consisting of dimethyl carbonate, diethyl carbonate, ethylmethyl carbonate, acetonitrile, diethyl ether, ethylene glycol dimethyl ether, and any combination thereof.

The fundamental additive is selected from the group consisting of vinylene carbonate, fluorinated vinyl carbonate, vinyl sulfate, 1,3-propanesultone, tris(trimethylsilyl) phosphate, lithium difluorophosphate, lithium bi(fluorosulfonyl)imide, lithium bis(difluoro-oxalate)phosphate, lithium bifluorooxalate borate, sodium bifluorooxalate borate, sodium difluorophosphate, sodium bis(fluorosulfonyl)imide, sodium bis(oxalate)difluorophosphate, and any combination thereof, and a mass percent of any one of the fundamental additives in the electrolyte solution is in a range of 0.1wt% to 5.0wt%, and the fundamental additive is different from the main salt.

In the first aspect of the present invention, in the process of preparing the pyrosulfate-boron trifluoride composite lithium salt, the raw material lithium pyrosulfate is made from disilyl sulfate and lithium hexafluorophosphate. The pyrosulfate-boron trifluoride composite lithium salt made of the raw material lithium pyrosulfate is reddish brown. The chromaticity stability of the electrolyte solution will be affected when the pyrosulfate-boron trifluoride composite lithium salt made of the raw material lithium pyrosulfate is used in the electrolyte solution.

In addition, the pyrosulfate-boron trifluoride composite lithium salt made from the lithium pyrosulfate prepared by different methods have different chromaticity. It can be concluded from further study that $SO_3$ contained in the lithium pyrosulfate raw material may increase chromaticity of the product, and affect the electrochemical performance of the battery using the pyrosulfate-boron trifluoride composite lithium salt. The above may be caused by the following reasons. In one aspect, $SO_3$ contained in the lithium pyrosulfate raw material may cause decomposition of the pyrosulfate-boron trifluoride lithium salt product and increase the chromaticity of the product. In another aspect, $SO_3$ contained in the lithium pyrosulfate raw material may unavoidably be transferred into the pyrosulfate-boron trifluoride composite lithium salt product; $SO_3$ has relatively high oxidizability, when the pyrosulfate-boron trifluoride composite lithium salt is used in the electrolyte solution, the oxidative material is capable of catalyzing fluorination of the solvent molecule and generating fluorinated polymer with high molecular weight, which cause aggravation of color change of the electrolyte solution, and worsen the electrochemical performance of the battery at the same time, and the cycle performance and the high-temperature storage performance may obviously decrease.

Besides, it is proved that the pyrosulfate-boron trifluoride composite sodium salt has the same characteristics and performance with the pyrosulfate-boron trifluoride composite lithium salt.

In a second aspect of the present invention, a method for preparing a pyrosulfate-boron trifluoride composite

metal salt with a low chromaticity is provided. The pyrosulfate-boron trifluoride composite metal salt prepared by the method is clear and permeable and has high purity. In addition, when the pyrosulfate-boron trifluoride composite metal salt with a low chromaticity is used in the electrolyte solution, the problem of color change may be improved, and the high-temperature performance of the battery may be further improved.

An object of the second aspect of the present invention is achieved by a following technical solution.

A method for preparing a pyrosulfate-boron trifluoride composite metal salt with a low chromaticity, which includes following steps: subjecting a pyrosulfate salt to a reaction with boron trifluoride gas or a boron trifluoride complex in a solvent to obtain a reaction liquid with a chromaticity of less than or equal to 50 Hazen, wherein a $SO_3$ content in the pyrosulfate salt is less than or equal to 500 ppm, the reaction liquid includes the pyrosulfate-boron trifluoride composite metal salt as shown in formula (I-1):

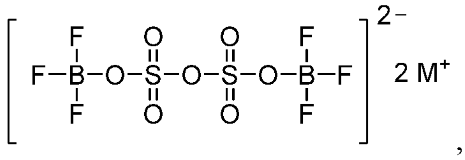

(I-1)

wherein in formula (I-1), M is selected from Li or Na. In some embodiments, M is Li.

For example, when pyrosulfate-boron trifluoride composite lithium salt is prepared, the reaction equation is shown hereinafter:

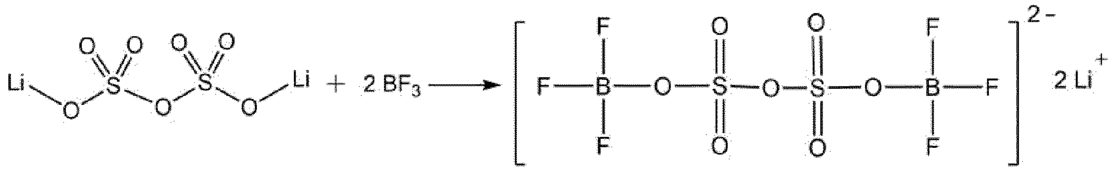

In some embodiments, a pyrosulfate salt with a $SO_3$ content of less than or equal to 200 ppm is applied as the raw material, and a reaction liquid with a chromaticity of less than or equal to 20 Hazen is prepared.

As long as the $SO_3$ content of the pyrosulfate salt raw material is controlled to be less than or equal to 200 ppm, and the contents of acid impurity gases such as $POF_3$, fluoroalkyl silane and the like are controlled at the same time, the pyrosulfate-boron trifluoride composite metal salt with a low chromaticity can be obtained.

In some embodiments, the pyrosulfate salt is obtained by following steps.

A step for preparing a sulfate salt, which includes following steps: subjecting an inorganic salt to a reaction with diluted sulfuric acid to obtain a bisulfate salt, wherein the inorganic salt is selected from the group consisting of sulfate salts, metal oxides, carbonate salts, metal hydroxide, bicarbonate salts, and any combination thereof; and the bisulfate salt is selected from sodium bisulfate or lithium bisulfate.

For example, when the inorganic salt is lithium sulfate, the reaction equation is shown hereinafter:

$$Li_2SO_4 + H_2SO_4 \rightarrow 2\ LiHSO_4$$

Step (2) preparing the pyrosulfate salt, which includes following steps: subjecting a bisulfate salt solid to thermal decomposition to obtain the pyrosulfate salt, wherein the pyrosulfate salt is selected from lithium pyrosulfate or sodium pyrosulfate.

For example, when the bisulfate salt is lithium bisulfate, the reaction equation is shown hereinafter:

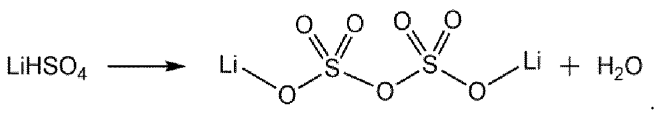

In step (1) of the present invention, diluted sulfuric acid is used as a raw material. Thus, a problem of corrosion caused by $SO_3$, concentrated sulfuric acid, fuming sulfuric acid can be avoided, and the $SO_3$ content in the pyrosulfate salt raw material prepared in step (1) can be reduced. In some embodiments, the mass concentration of the diluted sulfuric acid can be in a range of 10 wt% to 65 wt%. In actual use, a diluted sulfuric acid with a certain concentration can be directly used, and a diluted sulfuric acid with a higher concentration can be diluted and used. In some embodiments, the mass

concentration of the diluted sulfuric acid can be in a range of 15 wt% to 40 wt%.

In step (1), a molar ratio of the inorganic salt to the diluted sulfuric acid is in a range of 0.8: 1 to 1.2 : 1. In some embodiments, a molar ratio of the inorganic salt to the diluted sulfuric acid is in a range of 0.9 : 1 to 1.1 : 1. In some embodiments, the molar ratio of the inorganic salt to the diluted sulfuric acid is about 1 : 1. At the same time, a temperature of the reaction is in a range of 0 to 80 degrees centigrade, and a time of the reaction is in a range of 0.5 h to 24 h. In some embodiments, the temperature of the reaction is in a range of 20 degrees centigrade to 45 degrees centigrade, and the time of the reaction is in a range of 2 h to 4 h. By controlling the molar ratio between the sulfate salts and the diluted sulfuric acid, the temperature of the reaction and the time of the reaction, the product of the reaction in step (1) is mainly a bisulfate salt. In this way, the product of the reaction can be directly used in the following step after being dried by heating.

Step (2) includes the following step: calcining the bisulfate salt solid at a temperature in a range of 100 degrees centigrade to 300 degrees centigrade for 0.5 h to 72 h to obtain the pyrosulfate salt. In some embodiments, step (2) includes a following step: calcining the bisulfate salt solid at a temperature in a range of 130 degrees centigrade to 250 degrees centigrade for 2 h to 36 h to obtain the pyrosulfate salt. In some embodiments, step (2) includes a following step: calcining the bisulfate salt solid at a temperature in a range of 160 degrees centigrade to 200 degrees centigrade for 4 h to 12h to obtain the pyrosulfate salt. When the temperatures for calcining are different, the purities of the obtained pyrosulfate salt are different. When the temperature for calcining is unduly high, the product includes a large amount of impurities of sulfate salts, and the $SO_3$ content in the product is increased. When the temperature for calcining is unduly low, the bisulfate salt cannot react completely and a great amount of $H_2O$ is remained in the product.

In order to facilitate the reaction, before subjecting the bisulfate salt to thermal decomposition, the bisulfate salt solid obtained in step (1) is ground to obtain a uniform white powder, and the uniform white powder obtained after griding is placed in a heating device (i.e., a muffle furnace) and calcined to decompose the obtained pyrosulfate salt raw materials.

In the process of preparing the pyrosulfate-boron trifluoride composite metal salt, the reaction solvent is selected from the group consisting of vinyl carbonate, propylene carbonate, dimethyl carbonate, ethylmethyl carbonate, diethyl carbonate, methyl acetate, ethyl acetate, methyl propionate, γ-butyrolactone, diethyl ether, ethylene glycol dimethyl ether, acetonitrile, phenylacetonitrile, propionitrile, and any combination thereof. Taking use of the pyrosulfate-boron trifluoride composite metal salt in the electrolyte solution into consideration, the reaction solvent is optionally a common solvent generally used in the electrolyte solution. For example, the reaction solvent is at least one of dimethyl carbonate, ethylmethyl carbonate or diethyl carbonate.

The boron trifluoride reacts with pyrosulfate salt may be boron trifluoride gas or boron trifluoride complex. The boron trifluoride complex is selected from the group consisting of boron trifluoride diethyl ether complex, boron trifluoride ethylene glycol dimethyl ether complex, boron trifluoride dimethyl carbonate complex, boron trifluoride pyridine complex, boron trifluoride ethylamine complex, boron trifluoride butyl ether complex, boron trifluoride methyl ether complex, boron trifluoride acetonitrile complex, boron trifluoride piperidine complex, boron trifluoride phenol complex, boron trifluoride tetrahydrofuran complex, boron trifluoride dimethyl sulfide complex, boron trifluoride morpholine complex, and any combination thereof.

In the reaction between the pyrosulfate salt and the boron trifluoride gas or the boron trifluoride complex, a molar ratio of the pyrosulfate salt to the boron trifluoride gas or the boron trifluoride complex is in a range of 0.33 : 1 to 1.0 : 1, and a temperature of the reaction between the pyrosulfate salt and the boron trifluoride gas or the boron trifluoride complex is in a range of 40 degrees centigrade to 70 degrees centigrade, and a time of the reaction between the pyrosulfate salt and the boron trifluoride gas or the boron trifluoride complex is in a range of 5 h to 24 h. In some embodiments, the temperature of the reaction between the pyrosulfate salt and the boron trifluoride gas or the boron trifluoride complex is in a range of 50 degrees centigrade to 70 degrees centigrade, and the time of the reaction between the pyrosulfate salt and the boron trifluoride gas or the boron trifluoride complex is in a range of 5 h to 12 h. In this way, the pyrosulfate-boron trifluoride composite metal salt obtained in the second aspect of the present invention is mainly a chain product.

In a second aspect of the present invention, since factors such as the temperature of the reaction and the material ratio of the reaction and the like are different, except for the pyrosulfate-boron trifluoride composite metal salt as shown in formula (I-1), the reaction liquid may include the compounds as shown in at least one of formal (I-2), formal (I-3), formal (I-4), formal (I-5) or formula (I-6),

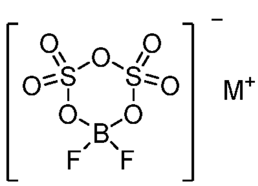

,

formula (I-2)

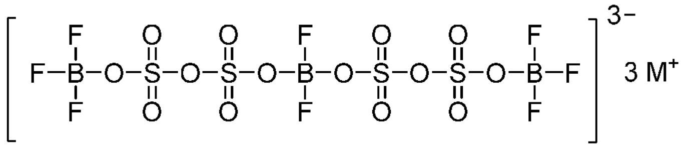
,

formula (I-3)

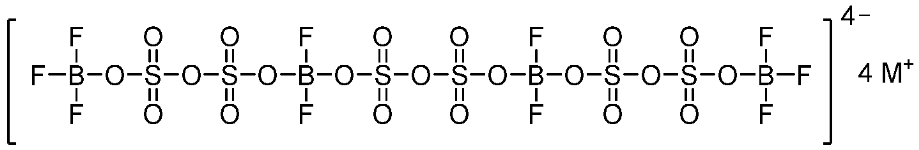
,

formula (I-4)

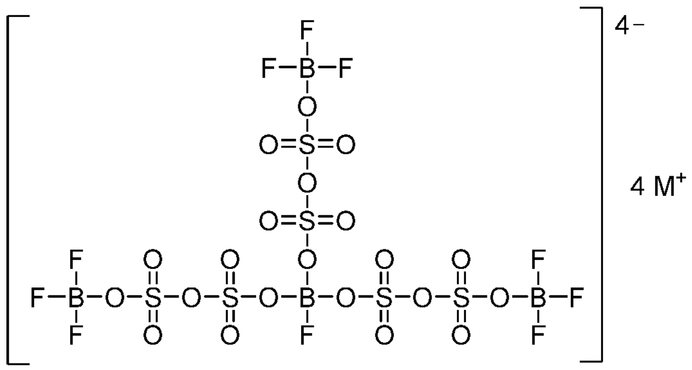
,

formula (I-5)

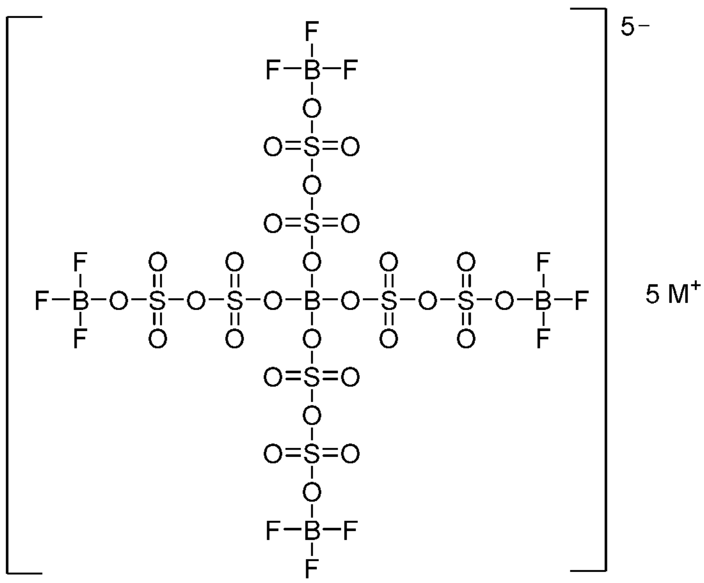
,

formula (I-6)

wherein in formula formal (I-2), formal (I-3), formal (I-4), formal (I-5) and formula (I-6), M is selected from Li or Na.

In some embodiments, the reaction liquid includes at least 80 wt% of the pyrosulfate-boron trifluoride composite metal salt as shown in the formula (I-1). In some embodiments, the reaction liquid includes 80 wt% to 95 wt% of the pyrosulfate-boron trifluoride composite metal salt as shown in the formula (I-1), and the compounds as shown in at least one of formal (I-2), formal (I-3), formal (I-4), formal (I-5) or formula (I-6) make up the rest.

In the present invention, a use of the pyrosulfate-boron trifluoride composite metal salt with a low chromaticity prepared by any one of the methods described above is further provided, which includes the step of: adding the pyrosulfate-boron trifluoride composite metal salt with a low chromaticity into an electrolyte solution, wherein a mass percent of the pyrosulfate-boron trifluoride composite metal salt in the electrolyte solution is in a range of 0.01 wt% to 15.0 wt%. In some embodiments, the mass percent of the pyrosulfate-boron trifluoride composite metal salt in the electrolyte solution is in a range of 0.1 wt% to 10.0 wt%. In some embodiments, the mass percent of the pyrosulfate-boron trifluoride composite metal salt in the electrolyte solution is in a range of 0.1 wt% to 5.0 wt%. In some embodiments, the mass percent of the pyrosulfate-boron trifluoride composite metal salt in the electrolyte solution is in a range of 0.1 wt% to 3.0 wt%.

An electrolyte solution obtained by adding the pyrosulfate-boron trifluoride composite metal salt can be used in a lithium-ion secondary battery or a sodium ion secondary battery, which can improve the cycle performance of the battery under conditions of high-voltage and high temperature, a high-temperature storage performance of the battery, and the cycle performance of the battery at a low temperature.

In some embodiments, the pyrosulfate-boron trifluoride composite metal salt is a pyrosulfate-boron trifluoride composite lithium salt, which is added in the electrolyte solution of the lithium-ion battery. An active material of the positive electrode of the lithium-ion secondary battery is selected from the group consisting of a nickel cobalt manganese ternary material, a nickel cobalt aluminum ternary material, a lithium cobalt oxide material, a lithium iron phosphate material, and any combination thereof. An active material of the negative electrode of the lithium-ion secondary battery is selected from the group consisting of graphite, a silicon-carbon material, silicon suboxide, silicon, tin, lithium metal, and any combination thereof.

In some embodiments, the pyrosulfate-boron trifluoride composite metal salt is a pyrosulfate-boron trifluoride composite sodium salt, which can be added in an electrolyte solution of a sodium ion battery. An active material of the positive electrode of the sodium ion secondary battery is selected from the group consisting of $NaMn_{(1-x-y)}Ni_yM_xO_2$ ($0 \leq x, y \leq 1$, M is Cu, Fe or Co), sodium manganate, sodium vanadium phosphate, sodium vanadium fluorophosphate, sodium iron phosphate, sodium manganese phosphate, $Na_xMnFe(CN)_6$ ($0<x\leq 2$), and any combination thereof. An active material of the negative electrode is selected from the group consisting of hard carbon, carbon black, amorphous carbon, graphite, $SnS_2$, $Na_2Ti_3O_7$, silica-based materials, metal oxides, metal sulfides, sodium metal, and any combination thereof.

Use of the pyrosulfate-boron trifluoride composite lithium salt in a high-voltage fast-charging lithium-ion secondary battery is further studied in the present invention. The pyrosulfate-boron trifluoride composite lithium salt can reduce a liquid-solid interface impedance in the battery and a charge migration impedance of the battery. However, when the pyrosulfate-boron trifluoride composite lithium salt is used with different active materials of the negative electrode, there is a huge difference between improvement of the fast-charging performance and the low-temperature performance of the batteries with different active materials of the negative electrode.

In a third aspect of the present invention, a high-voltage fast-charging lithium-ion secondary battery containing the pyrosulfate-boron trifluoride composite lithium salt and a certain active material of negative electrode is provided. The high-voltage fast-charging lithium-ion secondary battery includes a lithium-ion migration channel with low impedance, so that the fast-charging performance and the low-temperature performance of the battery can be improved.

An object of the second aspect of the present invention is achieved by a following technical solution.

A high-voltage fast-charging lithium-ion secondary battery, which includes a positive electrode, a negative electrode, a membrane and an electrolyte solution. The electrolyte solution includes a main lithium salt, a non-aqueous solvent and an additive, wherein the additive includes: a novel composite lithium salt, wherein the novel composite lithium salt at least includes a pyrosulfate-boron trifluoride composite lithium salt as shown in formula (II-1),

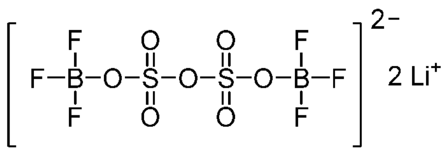
,

formula (II-1)

wherein a mass percent of the novel composite lithium salt in the electrolyte solution is in a range of 0.02 wt% to 5.0 wt%; optionally, the mass percent of the novel composite lithium salt in the electrolyte solution is in a range of 0.1 wt% to 2.0 wt%.

The negative electrode includes:

an active material which is capable of reversibly adsorbing and releasing lithium-ions, a specific surface area of the active material is in a range of 0.1 $m^2/g$ to 20.0 $m^2/g$; and optionally, the specific surface area of the active material is in a range of 0.5 $m^2/g$ to 10.0 $m^2/g$.

When the active material is one pure substance, a specific surface area of the substance should be compliant with the limitations above.

When the active material is a mixture of two substances or over two substances, the specific surface area of any one of the substances should be compliant with the limitations above.

When the battery includes the novel composite lithium salt and the active material of the negative material with the above specific surface area, a stable and lithium migration channel with low impedance and high conductivity can be formed, so as to improve the fast-charging performance and low-temperature performance of the battery. When the specific surface area of active material of the negative electrode is unduly low, a path of the lithium-ion migrating in the active material of the negative electrode is longer. Thus, the solid phase diffusion of the lithium is harder, a diffusion impedance and an internal impedance of the battery increase, and a fast-charging performance of the battery and a low-temperature performance of the battery are lowered. When the specific surface area of active material of the negative electrode is unduly high, unduly much electrolyte solution is participated in the generation of the liquid-solid phase, and side reactions increase. Thus, the number of the irreversible lithium-ion increases, the boundary phase becomes thicker, the internal impedance of the battery increases, and the fast-charging performance of the battery and the low-temperature performance of the battery are lowered.

The active material of the negative electrode is selected from either or both of a carbon material and a silicon material; the carbon material is selected from the group consisting of natural graphite, synthetic graphite, hard carbon, and any combination thereof, and the silicon material is selected from either or both of silicon and silicon suboxide.

The carbon material in the present invention can be common materials being used in the field of secondary battery. The natural graphite represents the graphite materials with different particle sizes or the graphite materials having a wide particle size distribution. Generally, the natural graphite includes a surface defect, and the lithium-ion secondary battery including the natural graphite has more side reactions and poor cycle performance. But the natural graphite is cheap and widely used in commercialization. The synthetic graphite represents graphite materials that are artificially prepared or selected. The synthetic graphite has a uniform particle size or a relatively narrow particle size distribution compared with the natural graphite. The synthetic graphite has better compatibility with the electrolyte solution and better performance. But the synthetic graphite is expensive and is generally used in the field of high performance lithium-ion secondary battery such as up-market new energy automobile and the like. The hard carbon represents carbon materials that is hard to be graphitized at a temperature greater than or equal to 2500 degrees centigrade. The structure inside the hard carbon is a highly disordered carbon structure with open interspaces. All of the natural graphite, the synthetic graphite and the hard carbon can be purchased from the market.

In some embodiments, the active material of the negative electrode at least includes the hard carbon, and a mass percent of the hard carbon in the active material of the negative electrode is in a rage of 0.1% to 100%. In some embodiments, the mass percentage of the hard carbon in the active material of the negative electrode is in a rage of 1% to 50%. In some embodiments, the mass percent of the hard carbon in the active material of the negative electrode is in a range of 5% to 20%.

Since the active material of the negative electrode includes the hard carbon, the diffusion performance of the lithium-ion in the negative electrode is obviously improved, and the reaction kinetics is good. At the same time, the electrolyte solution and the material of the negative electrode have good compatibility, which can facilitate forming a stable and permeable liquid-solid phase, thereby improving the fast-charging performance of the battery.

A value of the diffusion impedance is mainly decided by a state of the solid phase material in the lithium-ion secondary battery. Although the diffusion impedance is distributed in all of the frequency domain, it is mainly distributed in low frequency region (the frequency domain in a range of 1 Hz to 0.01 Hz). Therefore, a proportion of the alternating-current impedance in low frequency region (the frequency domain in a range of 1 Hz to 0.01 Hz) in all frequency regions (10000 Hz to 0.01 Hz) is an important means for evaluating a portion of the diffusion impedance in the total internal impedance of the battery, and is also an important factor in evaluating the fast-charging performance of the battery.

In the present invention, since the interaction between the pyrosulfate-boron trifluoride composite lithium salt and the certain active material of the negative electrode, an alternating-current impedance of the lithium-ion secondary battery in a frequency domain of 1 Hz to 0.01 Hz is in a range of 40% to 80% of an alternating-current impedance in a frequency domain of 10000 Hz to 0.01 Hz. In some embodiments, the alternating-current impedance of the lithium-ion secondary battery in a frequency domain of 1 Hz to 0.01 Hz is in a range of 60% to 70% of an alternating-current impedance in a frequency domain of 10000 Hz to 0.01 Hz.

The alternating-current impedance is tested under conditions that the temperature is in a range of 0 to 45 degrees centigrade, and a state of charge valve of the battery is in a range of 20% to 80%. In some embodiments, the alternating-current impedance of the battery in different frequency domains was tested at room temperature when the state of charge valve of the battery is about 50%.

Beyond that, the charge migration impedance can be affected by a positive electrode of the battery, a negative electrode of the battery, a membrane of the battery, and a liquid-solid boundary phase generated by interaction between the electrolyte solution, the positive electrode and the negative electrode. The influence caused by the membrane is small and can be common membranes generally used in the lithium-ion secondary battery. In some embodiments, the membrane is selected from the group consisting of polyolefin membranes, polyester membranes, cellulose membranes,

polyimide membranes, and any combination thereof; and the membrane can be further processed by a ceramic coating technology. In the present invention, the material of the positive electrode is a common material of the positive electrode generally used in the lithium-ion secondary battery. The material of the positive electrode influences the charge migration impedance of the battery. However, in order to improve the energy density of the battery, a high-voltage battery system is used in the present invention, and the material of the positive electrode is limited. In some embodiments, the active material of the positive electrode is selected from the group consisting of lithium nickel-cobalt manganese oxide, lithium nickel-cobalt aluminate, lithium cobalt oxide, lithium nickel oxide, layered lithium manganese, spinel-type lithium manganese, lithium nickel manganese oxide, and any combination thereof.

The electrolyte solution additive and a liquid-solid boundary phase generated by interaction between the electrolyte solution additive and the negative electrode have great influence on the charge migration impedance of the lithium-ion secondary battery. A process that the lithium ion is migrated from the liquid-solid boundary phase to the solid phase of the material of the negative electrode is a main part of the charge migration impedance. A part of the alternating-current impedance generated in the process is distributed in a low frequency domain in a range of 1 Hz to 0.1 Hz, and a part of the alternating-current impedance generated in the process superposes with the diffusion impedance. It can be concluded from the decoupling data of the present invention that under conditions of the test temperatures and state of charge described above, the charge migration impedance is in a range of 20% to 40% of the alternating-current impedance in a total frequency domain of 10000 Hz to 0.01 Hz.

Since processes for preparing the novel composite lithium salt are different, the novel composite lithium salt includes at least one of the compounds as shown in formal (II-2), formal (II-3), formal (II-4), formal (II-5) or formal (II-6),

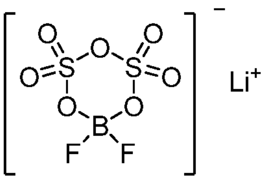

(II-2),

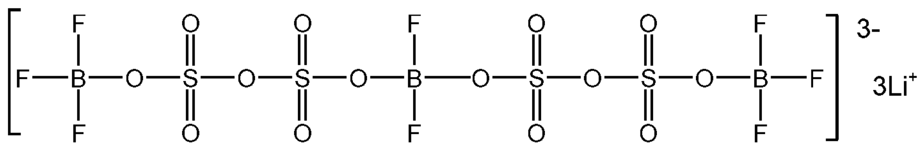

(II-3),

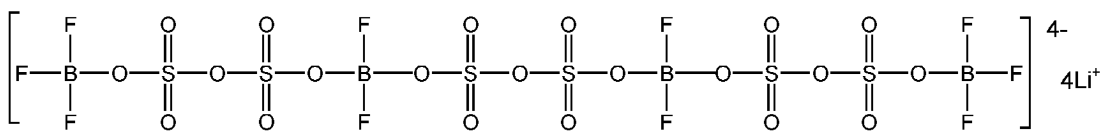

(II-4),

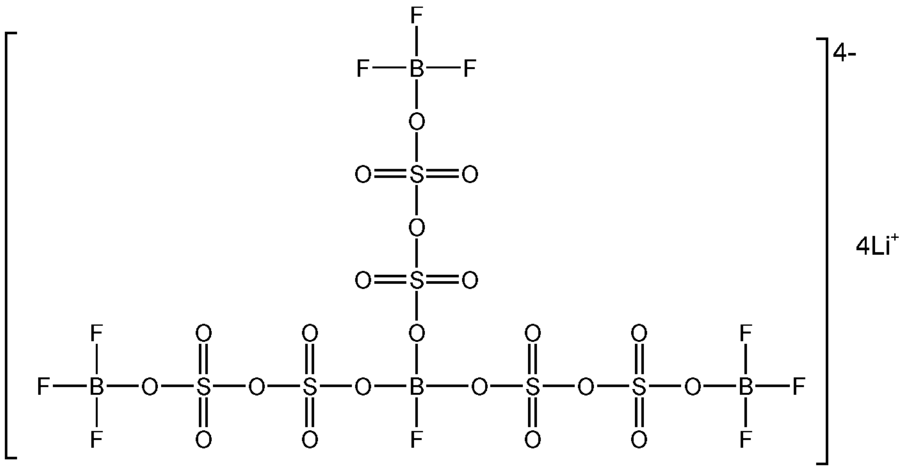

(II-5),

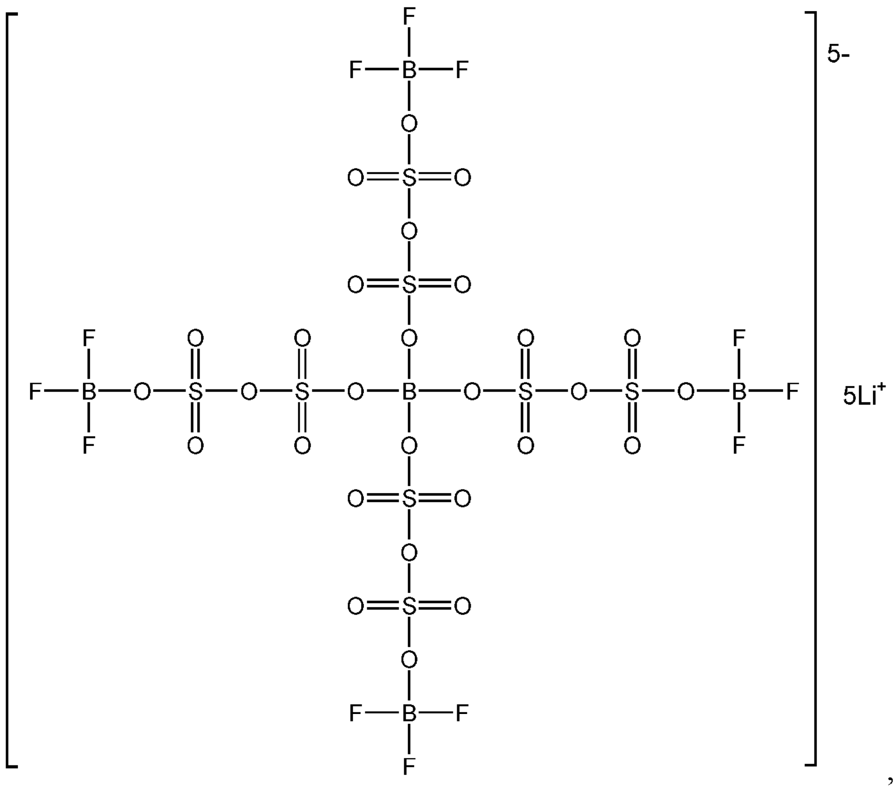

(II-6),

and the novel composite lithium salt includes at least 80.0 wt% of the pyrosulfate-boron trifluoride composite lithium salt as shown in the formula (II-1). In some embodiments, the novel composite lithium salt includes 80.0 wt% to 95.0 wt% of the pyrosulfate-boron trifluoride composite lithium salt as shown in the formula (II-1), and the at least one of the compounds as shown in formal (II-2), formal (II-3), formal (II-4), formal (II-5) or formal (II-6) make up the rest.

In the lithium-ion secondary battery described above, the additive further includes a fundamental additive, wherein the fundamental additive is selected from the group consisting of vinylene carbonate, fluorinated vinyl carbonate, vinyl ethylene carbonate, tris(trimethylsilyl) phosphate, 1,3-propanesultone, 1,3-propanesultone, vinyl sulfate, lithium difluorophosphate, lithium bi(fluorosulfonyl)imide, succinic anhydride, adiponitrile, cyclohexylbenzene, lithium bis(difluoro-oxalate)phosphate, lithium bifluorooxalate borate, and any combination thereof, and a mass percent of any one of the fundamental additives in the electrolyte solution is in a range of 0.1 wt% to 5.0 wt%. In some embodiments, the mass percent of any one of the fundamental additives in the electrolyte solution is in a range of 0.1 wt% to 2.0 wt%.

In some embodiments, the fundament additive is lithium bifluorooxalate borate (LiDFOB) and lithium difluorophosphate (LiDFP). The mass percent of the lithium bifluorooxalate borate (LiDFOB) in the electrolyte solution is in a range of 0.1 wt% to 2.0 wt%, and the mass percent of the lithium difluorophosphate (LiDFP) in the electrolyte solution is in a range of 0.1 wt% to 2.0 wt%. By interaction between the additive, the novel composite lithium salt and the active material of the negative electrode, the fast-charging performance of the battery and the low-temperature performance of the battery can be further improved.

In some embodiments, the fundament additive is fluorinated vinyl carbonate (FEC), vinyl sulfate (DTD), and tris(trimethylsilyl) phosphate (TMSP). The mass percent of the fluorinated vinyl carbonate in the electrolyte solution is in a range of 0.1 wt% to 2.0 wt%, the mass percent of the vinyl sulfate in the electrolyte solution is in a range of 0.1 wt% to 2.0 wt%, and the mass percent of the tris(trimethylsilyl) phosphate in the electrolyte solution is in a range of 0.1 wt% to 2.0 wt%. By interaction between the additive, the novel composite lithium salt and the active material of the negative electrode, the fast-charging performance of the battery and the low-temperature performance of the battery can be further improved.

In the lithium-ion secondary battery, the main lithium salt is selected from the group consisting of lithium hexafluorophosphate, lithium tetrafluoroborate, lithium hexafluoroarsenate, lithium perchlorate, lithium bis(oxalate) borate, lithium difluoro(oxalate)borate, lithium bi(fluorosulfonyl)imide, lithium bis(trifluoromethylsulfonyl)imide, lithium tetrafluorooxalate phosphate, lithium trioxalate phosphate, lithium difluorobis(oxalato)phosphate, and any combination thereof, and a molar concentration of the main lithium salt is in a range of 0.1 mol/L to 4.0 mol/L.

In the lithium-ion secondary battery, the non-aqueous solvent is selected from the group consisting of $C_3$-$C_6$ carbonate compounds, $C_3$-$C_8$ carboxylic ester compounds, sulphone compounds, ether compounds, nitrile compounds, and any combination thereof.

**In** some embodiments, the $C_3$-$C_6$ carbonate compounds are selected from the group consisting of vinyl carbonate, propylene carbonate, butylene carbonate, dimethyl carbonate, ethylmethyl carbonate, diethyl carbonate, methyl-2,2,2-trifluroethyl-, and any combination thereof; the $C_3$-$C_8$ carboxylic ester compounds are selected from the group consisting of γ-butyrolactone, methyl acetate, methyl propionate, methyl butyrate, ethyl acetate, ethyl propionate, ethyl butyrate, propyl acetate, propyl propionate, 2,2-difluoroethyl acetate, and any combination thereof; the sulphone compounds are selected from the group consisting of cyclobutyl sulfone, dimethyl sulfoxide, dimethyl sulfone, diethyl sulfone, and any combination thereof; the ether compounds are selected from the group consisting of triethylene glycol dimethyl ether, tetraethylene glycol dimethyl ether, and any combination thereof; and the nitrile compounds are selected from the group consisting of acetonitrile, butanedinitrile, adiponitrile, 1,3,6-hexanetrinitrile, p-fluorobenzonitrile, 1,2-bis(cyanoethoxy)ethane, and any combination thereof.

**In** some embodiments, the non-aqueous solvent is selected from at least two of vinyl carbonate, propylene carbonate, dimethyl carbonate, ethylmethyl carbonate, diethyl carbonate, γ-butyrolactone, ethyl acetate, ethyl propionate, propyl propionate, acetonitrile, butanedinitrile, adiponitrile or 1,3,6-hexanetrinitrile.

**In** the high high-voltage fast-charging lithium-ion secondary battery, the negative electrode further includes accessories such as a current collector, a conductive agent, a binder, and the like. Since the accessories have little influence on the interaction between the electrolyte solution and the negative electrode, the accessories of the present invention are not limited, and the accessories can be any known supplementary material.

The material of the positive electrode in the present invention can be common materials of the positive electrode of the lithium-ion secondary battery. In some embodiments, the material of the positive electrode is selected from the group consisting of lithium nickel-cobalt manganese oxide, lithium nickel-cobalt aluminate, lithium cobalt oxide, lithium nickel oxide, layered lithium manganese, spinel-type lithium manganese, lithium nickel manganese oxide, and any combination thereof. In some embodiments, the material of the positive electrode is selected from the group consisting of lithium nickel-cobalt manganese oxide, lithium cobalt oxide, lithium nickel oxide, and any combination thereof.

The high-voltage lithium-ion secondary battery of the present invention has great low-temperature fast-charging performance. When the lithium-ion secondary battery is charged under conditions of a charge rate in a range of 1 C to 6 C and a cut-off voltage in a range of 4.2 V to 5.0 V, a constant current charging ratio of the lithium-ion secondary battery is greater than or equal to 75%. In some embodiments, when the lithium-ion secondary battery is charged under conditions of the charge rate in a range of 2 C to 4 C and the cut-off voltage in a range of 4.25 V to 4.45 V, the constant current charging ratio of the lithium-ion secondary battery is greater than or equal to 90%.

Comparing to the present the related art, the present invention has the following advantages.

Firstly, a novel salt additive with the structure of pyrosulfate-boron trifluoride composite metal salt is provided in the present invention for the first time. When applied to an electrolyte solution, the pyrosulfate-boron trifluoride composite metal salt can balance a high-temperature performance of the battery and a low-temperature performance of the battery. In a first aspect, the pyrosulfate structure boosts the oxidation resistance of the electrolyte solution, significantly enhancing normal/high-temperature cycling performance of the battery and high-temperature storage performance of the battery. In another aspect, the -S-O-B- group in the composite metal salt can effectively regulate the formulation of the interfacial membrane and generate a cross-linked interfacial film containing S and B, reducing inorganic lithium salt content in the membrane and effectively lowering the internal resistance of the battery. Moreover, the cross-linked film includes more pores for better ion conductivity, thereby improving low-temperature performance of the battery.

Secondly, in the present invention, a pyrosulfate salt with low $SO_3$ content is prepared, and used a raw material to obtain a permeable pyrosulfate-boron trifluoride composite metal salt with chromaticity of less than or equal to 50 Hazen. When the pyrosulfate-boron trifluoride composite metal salt is used as an additive in the electrolyte solution, the problem of color change of the electrolyte solution is improved, the electrochemical performance of the battery is improved, particularly in suppressing gas generation during high-temperature storage and improving high-temperature capacity retention and high-temperature recovery rates. The pyrosulfate salt prepared by the method in the present invention has low $SO_3$ content, and no $POF_3$ or fluoroalkyl silane. The method for preparing the pyrosulfate salt is simple, cost-effective, and environmentally friendly, making it suitable for industrialization.

Thirdly, the pyrosulfate-boron trifluoride composite lithium salt and a certain negative electrode strengthens the interaction between the electrolyte solution and the negative electrode. It resolves the problem of high solid-phase impedance formed by the electrolyte solution, negative electrode, and the reaction therebetween, thereby enhancing the fast-charging of the lithium-ion secondary battery and low-temperature performance of the lithium-ion secondary battery.

Fourthly, in the present invention, by using a relaxation time distribution function, the components and magnitudes of the internal impedance of the lithium-ion secondary battery are distinguished. It is verified that the lithium secondary battery prepared by using the electrolyte solution and negative electrode specified in the present invention can simultaneously reduce charge migration impedance of the battery and diffusion impedance of the battery. Although the specific mechanism of how the electrolyte solution and negative electrode affect the charge migration impedance and diffusion impedance is unclear and debated, the following conclusions can be drawn from the experimental results: the novel composite lithium salt and specific negative electrode in the present invention work synergistically during battery preparation to form a stable electrolyte solution-negative electrode channel with strong ion permeability, thus improving the electrochemical performance of the lithium-ion secondary battery.

## BRIEF DESCRIPTION OF THE DRAWINGS

FIG. 1 is a $^{19}$F-NMR spectrum of a 2.1 # lithium salt prepared in embodiment 2.1 of the present invention.
FIG. 1 is a $^{11}$B-NMR spectrum of a 2.1 # lithium salt prepared in embodiment 2.1 of the present invention.

## DETAILED DESCRIPTION

The present invention will be further explained with specific embodiments, but the present invention is not limited to the specific embodiments. Ordinary skill in this art should be understood that the present invention encompasses all alternative, improved, and equivalent solutions included in a scope of the claims.

In a first aspect of embodiments of the present invention, a method for preparing pyrosulfate-boron trifluoride composite metal salt is provided. The lithium pyrosulfate/ sodium pyrosulfate used in the method for preparing pyrosulfate-boron trifluoride composite metal salt is made from disilyl sulfate and lithium hexafluorophosphate/sodium hexafluorophosphate as raw materials.

First, preparation of additive

Preparation embodiment 1

A method for preparing an electrolyte additive of pyrosulfate-boron trifluoride composite lithium salt was provided in the present preparation embodiment. The method includes the following steps.

Step 1: 0.2 mol lithium pyrosulfate (purity 99%) was added to a reaction flask in a drying room with a dew point of -40 °C, dimethyl carbonate was used as a solvent and a system was mixed evenly by stirring; 0.4 mol boron trifluoride gas was added to the reaction flask, reacted at 25 °C for 5 h, and a pyrosulfate-boron trifluoride composite lithium salt reaction liquid was obtained.

Step 2: a reaction solvent and residual unreacted boron trifluoride in a crude product was removed by reduced pressure distillation, a temperature of the reduced pressure distillation was 60 °C, a time of the reduced pressure distillation was 0.5 h, pyrosulfate-boron trifluoride composite lithium salt was obtained and denoted as 1.1# lithium salt.

The 1.1# lithium salt was tested by nuclear magnetic resonance fluorine - 19 spectroscopy (19F-NMR) and nuclear magnetic resonance boron - 11 spectroscopy (11B-NMR) to obtain nuclear magnetic resonance spectroscopy (NMR) spectra. In the NMR spectra, peaks were observed at $\delta$ = -150.78 ppm in F spectrum and $\delta$ = -1.17 ppm in B spectrum, it could be concluded that the product was a compound as shown in formula (I-1), and M was Li. Peaks were observed at $\delta$ = -144.21 ppm in the F spectrum and $\delta$ = -0.81 ppm in the B spectrum, it could be concluded that the product was a compound as shown in formula (I-2), and M was Li. An integral area ratio between $\delta$ = -1.17 ppm in the B spectrum

and $\delta$ = - 0.81 ppm was 8.9: 1. After analyzing, 1.1# lithium salt was confirmed to contain 90.0% of compound as shown in formula (I-2, wherein M was Li) and 10.0% of compound as shown in formula (I-1, wherein M was Li).

Preparation embodiment 2

The present preparation embodiment was substantially the same as preparation embodiment 1, excepting that a reaction temperature in step 1 increased to 50 °C, and a product was obtained and denoted as 1.2# lithium salt.

The 1.2# lithium salt was tested by 19F-NMR and 11B-NMR to obtain NMR spectra. In the NMR spectra, peaks same as the preparation embodiment 1 were obtained expect that an integral area ratio of $\delta$ = -1.17 ppm in the B spectrum and $\delta$ = -0.81 ppm in the B spectrum was 1: 9. After analyzing, the 1.2# lithium salt was confirmed to contain 9.9% of compound as shown in formula (I-2, and M was Li) and 90.1% of compound as shown in formula (I-1, and M was Li).

Preparation embodiment 3

The present preparation embodiment was substantially the same as preparation embodiment 2, excepting that reaction time in step 1 increased to 8 h, and a product was obtained and denoted as 1.3# lithium salt.

The 1.3# lithium salt was tested by 19F-NMR and 11B-NMR to obtain NMR spectra. In the NMR spectra, peaks of the compound as shown in formula (I-1, and M was Li) (which were consist with the peaks of the compound as shown in formula (I-1, and M was Li) in the preparation embodiment 1) were observed. In addition, in the NMR spectra, peaks were observed at $\delta$ = -150.38 ppm in the F spectrum and $\delta$ = -144.25 ppm in the F spectrum, and a peak area integral ratio of $\delta$ = -150.38 ppm in the F spectrum and $\delta$ = -144.25 ppm in the F spectrum was 3:1. In the NMR spectra, peaks were observed at $\delta$ = -1.12 ppm in the B spectrum and $\delta$ = -0.78 ppm in the B spectrum, and a peak area integral ratio between $\delta$ = -1.12 ppm in the B spectrum and $\delta$ = -0.78 ppm in the B spectrum was 2:1. A substance was determined as a compound as shown in formula (I-3, and M was Li).

An integral area ratio of B spectrum $\delta$ = -1.17 ppm and $\delta$ = -0.78 ppm was 6.19: 1. After analyzing, the 1.3# lithium salt was confirmed to contain 86.1% compound as shown in formula (I-1, and M was Li) and 13.9% compound as shown in formula (I-3, and M was Li).

Preparation embodiment 4

The present preparation embodiment was substantially the same as preparation embodiment 2, except that a reaction time in step 1 increased to 12 h, and a product was obtained and denoted as 1.4# lithium salt.

The 1.4# lithium salt was tested by 19F-NMR and 11B-NMR to obtain NMR spectra. In the NMR spectra, peaks of the compound as shown in formula (I-1, and M was Li) and peaks of the compound as shown in formula (I-3, and M was Li) were observed (which consisted with the peaks of the compound as shown in formula (I-1, and M was Li) and the peaks of the compound as shown in formula (I-1, and M was Li) in the preparation embodiment 3). In addition, in the NMR spectra, peaks were observed at $\delta$ = -150.12 ppm in the F spectrum and $\delta$ = -143.73 ppm in the F spectrum, and a peak area integral ratio between $\delta$ = -150.12 ppm in the F spectrum and $\delta$ = -143.73 ppm in the F spectrum was 1.5: 1. In the NMR spectra, peaks were observed at $\delta$ = -1.10 ppm in the B spectrum and $\delta$ = -0.71 ppm in the B spectrum, and a peak area integral ratio between $\delta$ = -1.10 ppm in the B spectrum and $\delta$ = -0.71 ppm in the B spectrum was 1: 1. A substance was determined as a compound as shown in formula (I-4, and M was Li).

A peak integral area ratio between $\delta$ = -1.17 ppm in the B spectrum, $\delta$ = -0.78 ppm in the B spectrum and $\delta$ = -0.71 ppm in the B spectrum was 16.11: 1.75: 1. After analyzing, the 1.4# lithium salt was confirmed to contain 85.4% of the compound as shown in formula (I-1, and M was Li), 9.3% of the compound as shown in formula (I-3, and M was Li) and 5.3% of the compound as shown in formula (I-4, and M was Li).

Preparation embodiment 5

The present preparation embodiment was substantially the same as preparation embodiment 2, except that a reaction time in step 1 increased to 20 h, and a product was obtained and denoted as 1.5# lithium salt.

The 1.5# lithium salt was tested by 19F-NMR and 11B-NMR to obtain NMR spectra. In the NMR spectra, peaks of the compound as shown in formula (I-1, and M was Li), peaks of the compound as shown in formula (I-3, and M was Li), and peaks of the compound as shown in formula (I-4, and M was Li) were observed (which were consist with the peaks of the compound as shown in formula (I-1, and M was Li), the peaks of the compound as shown in formula (I-3, and M was Li) and the peaks of the compound as shown in formula (I-4, and M was Li) in the preparation embodiment 4). In addition, in the NMR spectra, peaks were observed at $\delta$ = -149.36 ppm in the F spectrum and $\delta$ = -141.12 ppm in the F spectrum, and a peak area integral ratio of $\delta$ = -149.36 ppm in the F spectrum and $\delta$ = -141.12 ppm in the F spectrum was 6.1: 1. In the NMR spectra, peaks were observed at $\delta$ = -1.01 ppm in the B spectrum and $\delta$ = -0.63 ppm in the B spectrum, and a peak area

integral ratio between $\delta$ = -1.01 ppm in the B spectrum and $\delta$ = -0.63 ppm in the B spectrum was 2.9: 1. A substance was determined as a compound as shown in formula (I-5, and M was Li).

An integral area ratio among $\delta$ = -1.17 ppm in the B spectrum, $\delta$ = -0.78 ppm in the B spectrum, $\delta$ = -0.71 ppm in the B spectrum, and $\delta$ = -0.63 ppm in the B spectrum was 28.2: 3.17: 2.1: 1. After analyzing, the 1.5# lithium salt was confirmed to contain 81.8% of the compound as shown in formula (I-1, and M was Li), 9.2% of the compound as shown in formula (I-3, and M was Li), 6.1% of the compound as shown in formula (I-4, and M was Li), and 2.9% of the compound as shown in formula (I-5, and M was Li).

Preparation embodiment 6

The present preparation embodiment was substantially the same as preparation embodiment 2, excepting that a reaction time in step 1 increased to 24 h, and a product was obtained and denoted as 1.6# lithium salt.

The 1.6# lithium salt was tested by 19F-NMR and 11B-NMR to obtain NMR spectra. In the NMR spectra, peaks of the compound as shown in formula (I-1, and M was Li), peaks of the compound as shown in formula (I-3, and M was Li), peaks of the compound as shown in formula (I-4, and M was Li) and peaks of the compound as shown in formula (I-5, and M was Li) were observed (which were consist with the peaks of the compound as shown in formula (I-1, and M was Li), the peaks of the compound as shown in formula (I-3, and M was Li), the peaks of the compound as shown in formula (I-4, and M was Li), and the peaks of the compound as shown in formula (I-5, and M was Li) in the preparation embodiment 5). In addition, peaks were observed at $\delta$ = -147.21 ppm in the F spectrum. In the NMR spectra, peaks were observed at $\delta$ = -0.89 ppm in the B spectrum and $\delta$ = -0.56 ppm in the B spectrum, and a peak area integral ratio between $\delta$ = -0.89 ppm in the B spectrum and $\delta$ = -0.56 ppm in the B spectrum was 4.2: 1. A substance was determined as a compound as shown in formula (I-6, and M was Li).

An integral area ratio between $\delta$ = -1.17 ppm in the B spectrum, $\delta$ = -0.78 ppm in the B spectrum, $\delta$ = -0.71 ppm in the B spectrum, $\delta$ = -0.63 ppm in the B spectrum, and $\delta$ = -0.56 ppm in the B spectrum was 36.18: 3.72: 2.23: 1. After analyzing, the 1.6# lithium salt was confirmed to contain 79.6% of the compound as shown in formula (I-1, and M was Li), 8.2% of the compound as shown in formula (I-3, and M was Li), 5.1% of the compound as shown in formula (I-4, and M was Li), 4.9% of the compound as shown in formula (I-5, and M was Li) and 2.2% of the compound as shown in formula (I-6, and M was Li).

Preparation embodiment 7

The present preparation embodiment was substantially the same as preparation embodiment 2, excepting that reaction temperature in step 1 increased to 70 °C, and a product was obtained and denoted as 1.7# lithium salt.

The 1.7# lithium salt was tested by 19F-NMR and 11B-NMR to obtain NMR spectra. In the NMR spectra, peaks of the compound as shown in formula (I-1, and M was Li), peaks of the compound as shown in formula (I-3, and M was Li), and peaks of the compound as shown in formula (I-4, and M was Li) were observed (which were consist with the peaks of the compound as shown in formula (I-1, and M was Li), the peaks of the compound as shown in formula (I-3, and M was Li) and the peaks of the compound as shown in formula (I-4, and M was Li) in the preparation embodiment 4).

An integral area ratio among $\delta$ = -1.17 ppm in the B spectrum, $\delta$ = -0.78 ppm in the B spectrum, and $\delta$ = -0.71 ppm in the B spectrum was 13.41: 1.44: 1. After analyzing, the 1.7# lithium salt was confirmed to contain 84.6% of the compound as shown in formula (I-1, and M was Li), 9.1% of the compound as shown in formula (I-3, and M was Li), and 6.3% of the compound as shown in formula (I-4, and M was Li).

Preparation embodiment 8

The present preparation embodiment was substantially the same as preparation embodiment 2, excepting that a reaction temperature increased to 90°C, and a product was obtained and denoted as 1.8# lithium salt.

The 1.8# lithium salt was tested by 19F-NMRand 11B-NMR to obtain NMR spectra. In the NMR spectra, peaks of the compound as shown in formula (I-1, and M was Li), peaks of the compound as shown in formula (I-3, and M was Li), peaks of the compound as shown in formula (I-4, and M was Li) and peaks of the compound as shown in formula (I-5, and M was Li) were observed (which were consist with the peaks of the compound as shown in formula (I-1, and M was Li), the peaks of the compound as shown in formula (I-3, and M was Li), the peaks of the compound as shown in formula (I-4, and M was Li), and the peaks of the compound as shown in formula (I-5, and M was Li) in the preparation embodiment 5).

An integral area ratio between $\delta$ = -1.17 ppm in the B spectrum, $\delta$ = -0.78 ppm in the B spectrum, $\delta$ = -0.71 ppm in the B spectrum, and $\delta$ = -0.63 ppm in the B spectrum was 20.74: 2.28: 1.62: 1. After analyzing, the 1.8# lithium salt was confirmed to contain 80.9% of the compound as shown in formula (I-1, and M was Li), 8.9% of the compound as shown in formula (I-3, and M was Li), 6.3% of the compound as shown in formula (I-4, and M was Li), and 3.9% of the compound as shown in formula (I-5, and M was Li).

Preparation embodiment 9

The present preparation embodiment was substantially the same as preparation embodiment 1, excepting that, in step 1, lithium pyrosulfate was replaced with sodium pyrosulfate, and a product was obtained and denoted as 1.1# sodium salt.

The 1.1# sodium salt was tested by 19F-NMR and 11B-NMR to obtain NMR spectra. In the NMR spectra, peaks were observed at $\delta$ = -153.28 ppm in the F spectrum and $\delta$ = -1.01 ppm in the B spectrum, it could be concluded that the product was a compound as shown in formula (I-1), and M was Na. Peaks were observed at $\delta$ = -148.18 ppm in the F spectrum and $\delta$ = -0.69 ppm in the B spectrum, thereby determining a substance as a compound as shown in formula (I-2, and M was Na). An integral area ratio among $\delta$ = -1.05 ppm in the B spectrum, $\delta$ = -0.77 ppm in the B spectrum was 9.1: 1. After analyzing, the 1.1# sodium salt was confirmed to contain 91.1% of the compound as shown in formula (I-2, and M was Na) and 8.9% of the compound as shown in formula (I-1, and M was Na).

Preparation embodiment 10

The present preparation embodiment was substantially the same as preparation embodiment 9, excepting that a reaction temperature in step 1 increased to 50°C. A product of pyrosulfate-boron trifluoride composite sodium salt was obtained and denoted as 1.2# sodium salt.

The 1.2# sodium salt was tested by 19F-NMR and11B-NMR to obtain NMR spectra. In the NMR spectra, peaks same as the preparation embodiment 9 were obtained expect that an integral area ratio of $\delta$ = -1.05 ppm in the B spectrum and $\delta$ = -0.77 ppm in the B spectrum was 1: 8.35. After analyzing, the 1.2# sodium salt was confirmed to contain 89.3% of the compound as shown in formula (I-1, and M was Na) and 10.7% of the compound as shown in formula (I-2, and M was Na).

Second, electrolyte solution

A fundamental electrolyte solution 1 was prepared by following steps. In a glove box filled with argon gas (the content of moisture was less than 5 ppm, and the content of oxygen was less than 10 ppm), ethylene carbonate (EC), ethylmethyl carbonate (EMC), and diethyl carbonate (DEC) were uniformly mixed in a mass ratio of EC: EMC: DEC = 3: 5: 2, so as to obtain a mixed solution. Lithium hexafluorophosphate ($LiPF_6$) was slowly added to the mixed solution until a molar concentration of $LiPF_6$ was 1.2 mol/L. The fundamental electrolyte solution 1 was obtained.

A fundamental electrolyte solution 2 was prepared by following steps. In a glove box filled with argon gas (the content of moisture was less than 5 ppm, and the content of oxygen was less than 10 ppm), ethylene carbonate (EC), ethylmethyl carbonate (EMC), and diethyl carbonate (DEC) were uniformly mixed in a mass ratio of EC: EMC: DEC = 3: 5: 2, so as to obtain a mixed solution. Sodium hexafluorophosphate ($NaPF_6$) was slowly added to the mixed solution until a molar concentration of $LiPF_6$ was 1.2 mol/L. The fundamental electrolyte solution 2 was obtained

Embodiment 1.1

0.2 wt% of 1.2# lithium salt was added to the fundamental electrolyte solution 1 to obtain an electrolyte solution of the present embodiment.

Embodiment 1.2

1 wt% of 1.2# lithium salt was added to the fundamental electrolyte solution 1 to obtain an electrolyte solution of the present embodiment.

Embodiment 1.3

2 wt% of 1.2# lithium salt was added to the fundamental electrolyte solution 1 to obtain an electrolyte solution of the present embodiment.

Embodiment 1.4

3 wt% of 1.2# lithium salt was added to the fundamental electrolyte solution 1 to obtain an electrolyte solution of the present embodiment.

Embodiment 1.5

1 wt% of 1.1# lithium salt was added to the fundamental electrolyte solution 1 to obtain an electrolyte solution of the present embodiment.

Embodiment 1.6

1 wt% of 1.3# lithium salt was added to the fundamental electrolyte solution 1 to obtain an electrolyte solution of the present embodiment.

Embodiment 1.7

1 wt% of 1.4# lithium salt was added to the fundamental electrolyte solution 1 to obtain an electrolyte solution of the present embodiment.

Embodiment 1.8

1 wt% of 1.5# lithium salt was added to the fundamental electrolyte solution 1 to obtain an electrolyte solution of the present embodiment.

Embodiment 1.9

1 wt% of 1.6# lithium salt was added to the fundamental electrolyte solution 1 to obtain an electrolyte solution of the present embodiment.

Embodiment 1.10

1 wt% of 1.2# lithium salt and 1 wt% of vinylene carbonate (VC) were added to the fundamental electrolyte solution 1 to obtain an electrolyte solution of the present embodiment.

Embodiment 1.11

1 wt% of 1.2# lithium salt and 1 wt% of 1,3-propanesultone (PS) were added to the fundamental electrolyte solution 1 to obtain an electrolyte solution of the present embodiment.

Embodiment 1.12

0.2 wt% of 1.2# sodium salt was added to the fundamental electrolyte solution 2 to obtain an electrolyte solution of the present embodiment.

Embodiment 1.13

1.0 wt% of 1.2# sodium salt was added to the fundamental electrolyte solution 2 to obtain an electrolyte solution of the present embodiment.

Comparative embodiment 1.1

0.2 wt% of lithium pyrosulfate was added to the fundamental electrolyte solution 1 to obtain an electrolyte solution of the present comparative embodiment.

Comparative embodiment 1.2

1 wt% of lithium pyrosulfate was added to the fundamental electrolyte solution 1 to obtain an electrolyte solution of the present comparative embodiment. A large amount of insoluble substances appeared in the electrolyte solution, such that a following battery assembly test cannot be processed. It can be concluded that lithium pyrosulfate might not dissolve completely. A solubility of lithium pyrosulfate was tested and was 0.2 wt%.

Comparative embodiment 1.3

The fundamental electrolyte solution 1 was not processed to obtain an electrolyte solution of the present embodiment.

Comparative embodiment 1.4

The fundamental electrolyte solution 2 was not processed to obtain an electrolyte solution of the present embodiment.

Second, electrochemical performance test.

Pouch lithium-ion batteries with a capacity of 1260 mAh were made of the electrolyte solution obtained in the above embodiment 1.1 to embodiment 1.11 and comparative embodiment 1.1 to comparative embodiment 1.3, respectively. The pouch lithium-ion batteries included positive electrode plates, negative electrode plates, membranes, electrolyte solutions, and battery accessories. The active material of the positive electrode was a ternary material of the positive electrode ($LiNi_{0.6}Co_{0.2}Mn_{0.2}O_2$), and the active material of the negative electrode is high-capacity graphite. A process of preparing the pouch lithium-ion batteries was as follows: the positive electrode plates, the membranes, and the negative electrode plates were wound together to form a core and sealed by an Al-plastic film and roasted, such that the moisture content of the electrode met requirements. After roasting, a battery cell was injected by the electrolyte solutions, and a finished pouch battery cell was obtained via processes such as static placement, chemical transformation, capacity division, and aging.

Sodium-ion pouch batteries with a capacity of 1260 mAh were made of the electrolyte solution obtained in the above embodiment 1.12 to embodiment 1.13 and comparative embodiment 1.4, respectively. The pouch sodium-ion batteries included positive electrode plates, negative electrode plates, membranes, electrolyte solutions, and battery accessories. The active material of the positive electrode was a ternary material of the positive electrode ($NaNi_{0.33}Fe_{0.33}Mn_{0.33}O_2$), and the active material of the negative electrode was hard carbon. A process of preparing the pouch sodium-ion batteries was as follows: the positive electrode plates, the membranes, and the negative electrode plates were wound together to form a core and sealed by an Al-plastic film and roasted, such that the moisture content of the electrode met requirements. After roasting, a battery cell was injected by the electrolyte solutions, and a finished pouch battery cell was obtained via processes such as static placement, chemical transformation, capacity division, and aging.

A performance of the above obtained pouch lithium-ion batteries and sodium-ion batteries was tested. The test voltage was in a range of 2.8 V to 4.2 V. The performance test includes the following tests.

(1) High-temperature storage performance test at 60 °C. Batteries were charged into 100% state of charge (SOC) and stored in an oven at 60 ± 2°C for 28 days. Sizes of the batteries before and after storage were tested, a volume expansion rate of each of the batteries before and after storage at 60 °C was obtained. A value of direct current resistance (DCR) after the storage was tested at room temperature, a percentage of the value of DCR after the storage to a value of an initial DCR was calculated, which was defined as a discharge DCR change rate.

(2) Cycling performance test at room temperature of 25 °C: the batteries were circulations of charging at a current of 1C and discharging at a current of 1C in an oven at 25 ± 1 °C, and a discharge capacity of each circulation was calculated, the circulation was repeated for 500 times, and a capacity retention rate of the batteries after the cycle was calculated.

(3) Test of discharge performance at a low-temperature of -20 °C: the batteries were discharged at a discharge current of 1C to 80% of a lower limit voltage of the battery in an oven at -20 ± 1 °C, the capacity was defined as a low-temperature discharge capacity, percentage of the discharge capacity to the 1C discharge capacity at 25 °C was calculated and defined as a low-temperature discharge capacity retention rate.

Test results are shown as table 1:

Table 1 test results of electrochemical performance test

| Embodiment / Comparative embodiment | Additive | | Initial discharge DCR value at 25°C /mΩ | High-temperature storage at 60°C for 28 days | | Cycle was repeated for 500 weeks at 25 °C | Low-temperature discharge at -20 °C |
|---|---|---|---|---|---|---|---|
| | | | | Volume expansion rate % | change rate of discharge DCR value% | Capacity retention rate % | Capacity retention rate % |
| Embodiment 1.1 | 0.2% 1.2# lithium salt | / | 24.6 | 9.1 | 89.2 | 86.8 | 87.5 |

(continued)

| Embodiment / Comparative embodiment | Additive | | Initial discharge DCR value at 25°C /mΩ | High-temperature storage at 60°C for 28 days | | Cycle was repeated for 500 weeks at 25 °C | Low-temperature discharge at -20 °C |
|---|---|---|---|---|---|---|---|
| | | | | Volume expansion rate % | change rate of discharge DCR value% | Capacity retention rate % | Capacity retention rate % |
| Embodiment 1.2 | 1% 1.2# lithium salt | / | 22.1 | 8.7 | 87.6 | 87.1 | 88.4 |
| Embodiment 1.3 | 2% 1.2# lithium salt | / | 22.3 | 8.9 | 88.8 | 87.0 | 88.1 |
| Embodiment 1.4 | 3% 1.2# lithium salt | / | 22.4 | 9.1 | 89.0 | 87.1 | 88.2 |
| Embodiment 1.5 | 1% 1.1# lithium salt | / | 24.5 | 8.6 | 86.9 | 86.9 | 87.9 |
| Embodiment 1.6 | 1% 1.3# lithium salt | / | 22.4 | 8.9 | 87.3 | 87.3 | 88.5 |
| Embodiment 1.7 | 1% 1.4# lithium salt | / | 22.6 | 10.1 | 91.1 | 86.5 | 88.3 |
| Embodiment 1.8 | 1% 1.5# lithium salt | / | 22.8 | 10.9 | 91.8 | 86.2 | 88.1 |
| Embodiment 1.9 | 1% 1.6# lithium salt | / | 23.6 | 11.1 | 92.3 | 86.2 | 87.9 |
| Embodiment 1.10 | 1% 1.2# lithium salt | 1% VC | 22.6 | 7.5 | 69.5 | 90.1 | 88.5 |
| Embodiment 1.11 | 1% 1.2# lithium salt | 1% PS | 22.7 | 5.7 | 85.9 | 86.0 | 88.4 |
| Embodiment 1.12 | 0.2% 1.2# sodium salt | / | 32.6 | 10.1 | 87.5 | 84.7 | 84.5 |
| Embodiment 1.13 | 1% 1.2# sodium salt | / | 30.1 | 9.7 | 84.3 | 85.1 | 85.4 |
| Comparative embodiment 1.1 | 0.2% lithium pyrosulfate | / | 24.2 | 10.5 | 88.2 | 86.6 | 87.5 |
| Comparative embodiment 1.2 | 1% lithium pyrosulfate | / | / | / | / | / | / |
| Comparative embodiment 1.3 | / | / | 26.5 | 13.8 | 110 | 84.5 | 82.5 |
| Comparative embodiment 1.4 | / | / | 39.5 | 17.9 | 116 | 75.1 | 78.5 |

According to the above Table 1, the pyrosulfate-boron trifluoride composite lithium salt was added to the electrolyte solution, such that an initial impedance of each of the batteries might be reduced, a low-temperature discharge performance of each of the batteries might be improved, gas generation of each of the batteries during high-temperature storage and impedance growth of each of the batteries might be inhibited, and a cycling performance of each of the batteries might be improved. Thus, the high-temperature performance of the battery and the low-temperature performance of the battery can be considered at the same time.

Comparing embodiment 1.2, embodiment 1.5, embodiment 1.6, embodiment 1.7, embodiment 1.8, and embodiment 1.9, when a composition was mainly composed of linear monomers, an internal resistance of each of the batteries might be effectively reduced, and the cycling performance of the battery and the storage capacities of each of the batteries might be improved. When the composition was mainly composed of cyclic compounds, due to an enhanced electrochemical activity and a significant decreased proportion of boron atoms, the initial impedance of each of the batteries increased when comparing with straight chain compounds, but a storage performance of each of the batteries was slightly improved. When a dimer content in the composition increased, since the proportion of boron atoms in the composition decreased, the initial internal resistance of the battery increased and the low-temperature performance of each of the battery decreased when comparing with the composition including straight chain compounds. However, since the quality of the membrane was better, the storage performance of each of the batteries and the cycling performance of each of the batteries were slightly improved. As the number of polymerization units increased, such as a content of trimers or tetramers in the composition increased, the proportion of boron atoms further decreased, thereby further increasing the initial internal resistance of each of the batteries. When a degree of polymerization was too high, since the film was thick and insufficiently dense, the cycling performance of each of the battery and the storage performance of each of the battery deteriorated.

Comparing embodiment 1.2 with embodiment 1.8, the 1.2# lithium salt and VC were added to the electrolyte solution, it can not only avoid a defect of VC increasing the initial impedance of the battery, but also further improve the high-temperature storage performance and cycling performance of the battery. Comparing embodiment 1.2 with embodiment 1.9, when the 1.2# lithium salt and PS were added to the electrolyte solution at the same time, not only PS might greatly inhibit each battery to generate gas during a high-temperature storage, it might also avoid the defects of PS increasing initial impedance and deteriorating low-temperature performance of each of the batteries.

Comparing embodiment 1.1 to embodiment 1.4, as an additive amount of the 1.2 # lithium salt gradually increased, an overall performance of the battery improved firstly. However, with the additive amount of the 1.2 # lithium salt further increased, the performances of each of the batteries will not be improved. An optimal additive amount of the 1.2 # lithium salt was about 1 wt%. In the sodium-ion battery, performances of the 1.2# sodium salt were similar to those of the 1.2# lithium salt, such that the internal resistance of the sodium-ion battery might be further effectively reduced, and the cycling performance of the sodium-ion battery and storage performance of the sodium-ion battery might be further improved.

In a second aspect of embodiments of the present invention, a method for preparing a low chromaticity pyrosulfate-boron trifluoride composite metal salt was provided. A lithium pyrosulfate raw material used in the method was prepared from lithium bisulfate to obtain lithium hydrogen sulfate, and then the lithium hydrogen sulfate was decomposed to obtain lithium pyrosulfate solid.

Embodiment 2.1

The present embodiment provided a method for preparing pyrosulfate-boron trifluoride composite lithium salt. The method included the following steps.

Step 1, 1 mol $Li_2SO_4$ (purity 99.5%) was added to a reaction flask, 491.27 g of 20 wt% $H_2SO_4$ was added to the reaction flask, and the resultant was mixed evenly by stirring. The system was reacted at 25 °C for 4 h to obtain a $LiHSO_4$ reaction liquid. The $LiHSO_4$ reaction liquid was subjected to rotary evaporation, heating and drying to remove moisture, thereby obtaining a $LiHSO_4$ solid.

Step 2, $LiHSO_4$ solid was ground evenly to form a white powdery solid, and then the $LiHSO_4$ powder was placed in a crucible, and the crucible was placed in a muffle furnace and calcined at 150 °C for 10 h, thereby obtaining a lithium pyrosulfate solid. A content of $SO_3$ in lithium pyrosulfate solid was tested by IC method (ion chromatography test). The test was carried out according to the SJ/T11723-2018 industry standard document. Based on test results, the $SO_3$ content in the prepared lithium pyrosulfate solid was 124 ppm.

Step 3, 0.2 mol of lithium pyrosulfate (purity 99%) was added to a reaction flask in a drying room with a dew point of -40 °C, dimethyl carbonate was used as a solvent, and the resultant was mixed evenly by stirring. 0.4 mol of boron trifluoride gas was added to the reaction flask, the reaction flask was reacted at 50 °C for 5 h, and a pyrosulfate-boron trifluoride composite lithium salt reaction liquid was obtained. The reaction solvent and the unreacted boron trifluoride were removed by method of reduced pressure distillation to obtain the pyrosulfate-boron trifluoride composite lithium salt. The temperature of the reduced pressure distillation was 60 degrees centigrade and the time of the reduced pressure distillation was 0.5 h. The pyrosulfate-boron trifluoride composite lithium salt denoted as 2.1# lithium salt.

A chromaticity of the 2.1# lithium salt was tested by a colorimeter according to the SJ/T11723-2018 industry standard document, and a test result showed that the chromaticity of the 2.1 # lithium salt was 15.6 Hazen.

NMR F spectrum and NMR B spectrum were used to detect the product, which was compared with $LiBF_4$ standard sample. The NMR F spectrum was tested by 19F-NMR, and the NMR B spectrum was tested by 11B-NMR. FIG. 1

and FIG. 2 showed spectra of the NMR F spectrum of the 2.1# lithium salt and the NMR B spectrum of the 2.1# lithium salt, respectively. Referring to FIGs. 1 and 2, peak positions of the NMR F spectrum were shown herein.

Compound as shown in formula (I-1, and M was Li): $\delta$ = -151.05 ppm.

Compound as shown in formula (I-2, and M was Li): $\delta$ = -146.83 ppm.

Peak positions of the NMR B spectrum were shown herein.

Compound as shown in formula (I-1, and M was Li): $\delta$ = -0.75 ppm and

Compound as shown in formula (I-2, and M was Li): $\delta$ = -1.12 ppm.

In the NMR F spectrum of the $LiBF_4$ standard sample, peak $\delta$ = -156.69 ppm, and the NMR B spectrum peak $\delta$ = -1.02 ppm.

In order to verify and confirm the compounds, theoretical calculations and analyses were conducted on the compound as shown in formula (I-1, and M was Li), the compound as shown in formula (I-2, and M was Li) and the $LiBF_4$ standard sample. DFT/B3LYP function and 6-31 * * basis set were used to optimize a structure of the compound. The DFT/B3LYP function and the 6-311 * * basis set were used to calculate the nuclear magnetic peak positions of the above compounds. By synergistic analysis of calculated results, tested results and the NMR peak positions of the $LiBF_4$ standard sample (F: $\delta$ = -156.69 ppm, B: $\delta$ = -1.02 ppm), calculated results matched with the nuclear magnetic spectrum results, and the results had high credibility. Therefore, the 2.1# lithium salt mainly contained the compound as shown in formula I-1 (and M was Li), and further contained the compound as shown in formula I-2(and M was Li).

The peak area of the NMR F spectrum was integrated and calculated. In the 2.1# lithium salt, excluding an amount of dimethyl carbonate, a mass percent of the compound as shown in formula (I-1, and M was Li) was 95.84wt%, and a mass percent of the compound as shown in formula (I-2, and M was Li) was 4.16 wt%. Furthermore, an area integration conversion was performed via the B spectrum, and a calculation result of the B spectrum were consistent with that of the F spectrum, indicating a high level of reliability in the calculation results.

Embodiment 2.2

The present preparation embodiment was substantially the same as preparation embodiment 2.1, excepting that reaction temperature in step 3 increased from 50°C to 70°C. After step 3, a pyrosulfate-boron trifluoride composite lithium salt was obtained and denoted as 2.2# lithium salt.

After the IC test, a content of $SO_3$ in lithium pyrosulfate solid was 189 ppm. A chromaticity of the 2.2# lithium salt was tested by a colorimeter, and the chromaticity of the 2.2# lithium salt was 25.1 Hazen.

The 2.2 # lithium salt was tested by 19F-NMR and 11B-NMR and compared with the $LiBF_4$ standard sample, peak positions of the NMR F spectrum and the NMR B spectrum were as follows.

Compound as shown in formula (I-1, and M was Li), peaks were observed at $\delta$ = - 151.05 ppm in the NMR F spectrum and $\delta$ = -0.75 ppm in the NMR B spectrum.

Compound as shown in formula (I-3, and M was Li), peaks were observed at $\delta$ = - 150.65 ppm in the NMR F spectrum and $\delta$ = -144.52 ppm in the NMR F spectrum, in which a peak area integral ratio between $\delta$ = -150.65 ppm in the F spectrum and $\delta$ = -144.52 ppm in the F spectrum was 3: 1, and at $\delta$ = -0.67 ppm in the NMR B spectrum and $\delta$ = -0.36 ppm in the NMR B spectrum, in which peak area integral ratio between $\delta$ = -0.67 ppm in the B spectrum and $\delta$ = - 0.36 ppm in the B spectrum was 2: 1.

Compound as shown in formula (I-4, and M was Li), peaks were observed at $\delta$ = - 150.39 ppm in the NMR F spectrum and $\delta$ = -144.0 ppm in the NMR F spectrum, in which peak area integral ratio between $\delta$ = -150.39 ppm in the F spectrum and $\delta$ = -144.0 ppm in the F spectrum was 1.5: 1, and at $\delta$ = -0.65 ppm in the NMR B spectrum and $\delta$ = -0.26 ppm in the NMR B spectrum, in which peak area integral ratio between $\delta$ = -0.65 ppm in the B spectrum and $\delta$ = - 0.26 ppm in the B spectrum was 1: 1.

$LiBFF_4$ standard sample, peaks were observed at $\delta$ = -156.69 ppm in the NMR F spectrum and $\delta$ = -1.02 ppm in the NMR B spectrum.

In order to verify and confirm the compound, compounds as shown in formulas (I-1, I-2, I-4, M are both Li) and $LiBF_4$ sample were theoretically calculated and analyzed. DFT/B3LYP function and 6-31 * * basis set were used to optimize a structure of the compound. DFT/B3LYP function and 6-311 * * basis set were used to calculate the nuclear magnetic peak positions of the above compound. Calculated and tested results were synergistically analyzed with the nuclear magnetic peak positions of $LiBF_4$ standard sample (F: $\delta$ = -156.69 ppm, B: $\delta$ = -1.02 ppm), which matches with the above nuclear magnetic spectrum results, and had high credibility. Therefore, the 2.1# lithium salt included the compound as shown in formula I-1(and M was Li), and further included the compound as shown in formula I-3 (and M was Li) and the compound as shown in formula I-2(and M was Li).

The peak area of the NMR F spectrum was integrated and calculated. In the 2.2# lithium salt, excluding the amount of dimethyl carbonate, the mass percent of compound as shown in formula (I-1, and M was Li) was 84.6wt%, the mass percent of compound as shown in formula (I-3, and M was Li) was 9.1 wt% and the mass percent of compound as shown in formula (I-4, and M was Li) was 6.3 wt%. Furthermore, an area integration conversion was performed via the B

spectrum, and a calculation result of the B spectrum were consistent with that of the F spectrum, indicating a high level of reliability in the calculation result.

Embodiment 2.3

The present preparation embodiment was substantially the same as preparation embodiment 2.1, excepting that in step 1, 1mol of $Li_2SO_4$ was replaced by 1mol of $Li_2CO_3$ (purity 99.5%). A pyrosulfate-boron trifluoride composite lithium salt was obtained and denoted as 2.3# lithium salt.

After IC test, a content of $SO_3$ in lithium pyrosulfate solid was 177 ppm. A chromaticity of the 2.3# lithium salt was tested by a colorimeter and the chromaticity of the 2.3# lithium salt was 23.5 Hazen.

The peak area of the NMR F spectrum was integrated and calculated. In the 2.3# lithium salt, excluding the amount of dimethyl carbonate, the mass percent of compound as shown in formula (I-1, and M was Li) was 92.6wt%, and the mass percent of compound as shown in formula (I-2, and M was Li) was 7.4 wt%. Furthermore, an area integration conversion was performed via the B spectrum, and a calculation result of the B spectrum were consistent with that of the F spectrum, indicating a high level of reliability in the calculation result.

Embodiment 2.4

The present preparation embodiment was substantially the same as preparation embodiment 2.1, excepting that the temperature of the calcinating in step 2 increased from 150°C to 190°C. A pyrosulfate-boron trifluoride composite lithium salt was obtained and denoted as 2.4# lithium salt.

After IC test, a $SO_3$ content in lithium pyrosulfate solid was 372 ppm. A chromaticity of the 2.4# lithium salt was tested by a colorimeter and the chromaticity of the 2.4# lithium salt was 45.1 Hazen.

The peak area of the NMR F spectrum was integrated and calculated, which may be known that in the 2.4# lithium salt, excluding the amount of dimethyl carbonate, the mass percent of compound as shown in formula (I-1, and M was Li) was 90.3wt%, and the mass percent of compound as shown in formula (I-2, and M was Li) was 9.7 wt%. Furthermore, an area integration was conversed by the B spectrum, and a calculation result of the B spectrum was consistent with that of the F spectrum, indicating a high level of reliability in the calculation result.

Embodiment 2.5

The present preparation embodiment was substantially the same as preparation embodiment 2.1, except that, in step 1, a concentration of dilute sulfuric acid was adjusted that 270.21g of 40 wt% $H_2SO_4$ was added. A pyrosulfate-boron trifluoride composite lithium salt was obtained and denoted as 2.5# lithium salt.

After IC test, a content of $SO_3$ in lithium pyrosulfate solid was 316 ppm. A chromaticity of the 2.5# lithium salt was tested by a colorimeter and the chromaticity of the 2.5# lithium salt was 42.6 Hazen.

The peak area of the NMR F spectrum was integrated and calculated. In the 2.5# lithium salt, excluding the amount of dimethyl carbonate, the mass percent of the compound as shown in formula (I-1, and M was Li) was 94.3 wt%, and the mass percent of the compound as shown in formula (I-2, and M was Li) was 5.7 wt%. Furthermore, an area integration was conversed performed using the B spectrum, and a calculation result of the B spectrum was consistent with that of the F spectrum, indicating a high level of reliability in the calculation result.

Embodiment 2.6

The present preparation embodiment was substantially the same as preparation embodiment 2.1, excepting that $Li_2SO_4$ was replaced by $Na_2SO_4$. After step 1 and step 2, a sodium pyrosulfate solid was prepared. After step 3, a pyrosulfate-boron trifluoride composite lithium salt was obtained and denoted as 2.1# sodium salt.

After IC test, a $SO_3$ content in lithium pyrosulfate solid was 154 ppm. A chromaticity of the 2.1# sodium salt was tested by a colorimeter and the chromaticity of the 2.1# sodium salt was 21.1 Hazen.

The 2.1# sodium salt was tested by 19F-NMR and 11B-NMR and compared with a $NaBF_4$ standard sample.

Peak positions of the NMR F spectrum were as follows.

Compound as shown in formula (I-1, and M was Na), $\delta$ = -154.24 ppm.

Compound as shown in formula (I-2, and M was Na), $\delta$ = -150.21 ppm.

Peak positions of the NMR B spectrum were as follows:

Compound as shown in formula (I-1, and M was Na), $\delta$ = -0.64 ppm.

Compound as shown in formula (I-2, and M was Na), $\delta$ = -1.01 ppm.

In the $NaBFF_4$ sample, peaks were $\delta$ = -159.94 ppm in the NMR F spectrum and $\delta$ = -0.89 ppm in the NMR B spectrum.

In order to verify and confirm the compound, the compound as shown in formula (I-1, and M was Na), the compound as shown in formula (I-2, and M was Na) and $NaBF_4$ standard sample were theoretically calculated and analyzed. DFT/B3LYP function and 6-31 * * basis set were used to optimize a structure of the compound. DFT/B3LYP function and 6-311 * * basis set were used to calculate the nuclear magnetic peak positions of the above compound. Calculated and tested results were synergistically analyzed with the nuclear magnetic peak positions of $NaBF_4$ standard sample (F: $\delta$=-159.94 ppm, B: $\delta$=-0.89 ppm), calculated results matched with the nuclear magnetic spectrum results, and had high credibility. Therefore, the 2.1# sodium salt may be confirmed to mainly include the compound I-1(and M was Na), and further include the compound I-2 (and M was Na).

The peak area of the NMR F spectrum was integrated and calculated. In the 2.1# sodium salt, excluding the amount of dimethyl carbonate, the mass percent of the compound as shown in formula (I-1, and M was Na) was 92.72wt%, and the mass percent of the compound as shown in formula (I-2, and M was Na) was 7.28 wt%. Furthermore, an area integration conversed by the B spectrum, and a calculation result of the B spectrum were consistent with that of the F spectrum, indicating a high level of reliability in the calculation result.

Comparative embodiment 2.1

In the present comparative embodiment, lithium pyrosulfate was prepared from disilyl sulfate and lithium hexafluorophosphate as raw material, and pyrosulfate-boron trifluoride composite lithium salt was prepared by the lithium pyrosulfate, including following step 1 to step 3.

Step 1, in a drying room with a dew point of -40 °C, 1.0 mol of lithium hexafluorophosphate ($LiPF_6$, purity 99.9%) was added to a reaction flask, ethylmethyl carbonate was added as a solvent, and a mass ratio between the EMC and the $LiPF_6$ was 6: 1. The system was mixed evenly by stirring. Bis(trimethylsilyl) sulfate was added in batches to the reaction flask (the temperature was controlled to be not greater than about 25 °C), air was exhausted after adding each of the batches, and a total of 1.5 mol of bis (trimethylsilyl) sulfate was added. The reaction flask was reacted at 25 °C for 1 hour to obtain a reaction product.

Step 2, reaction product was depressurized and degassed for 0.5 hours to remove sulfur trioxide, phosphorus oxyfluoride, and fluoroalkyl silane gases, thereby obtaining a crude product. Isopropyl ether was added to the crude product as a crystallization solvent, stirred continuously for 1.5 h at 25 °C to precipitate crystals, stood, and filtered. A filter cake was washed for 2 times to 3 times with the isopropyl ether and then subjected to a reduced pressure heating process at 60 °C to obtain 94.5g of powdered lithium pyrosulfate product with a product yield of 99.47%.

Step 3 was the same as embodiment 2.1. A pyrosulfate-boron trifluoride composite lithium salt was obtained and denoted as 2.6# lithium salt.

After IC test, a $SO_3$ content in lithium pyrosulfate solid was 3512 ppm. A chromaticity of the 2.6# lithium salt was tested by a colorimeter and the chromaticity of the 2.6# lithium salt was 546 Hazen.

The peak area of the NMR F spectrum was integrated and calculated. In the 2.6# lithium salt, excluding the amount of dimethyl carbonate, the mass percent of compound as shown in formula (I-1, and M was Li) was 90.1wt%, and the mass percentage of compound as shown in formula (I-2, and M was Li) was 8.9 wt%. Furthermore, an area integration conversion was performed via the B spectrum, and a calculation result of the B spectrum were consistent with that of the F spectrum, indicating a high level of reliability in the calculation result.

Comparative embodiment 2.2

The present preparation embodiment was substantially the same as embodiment 2.1, excepting that the temperature of calcinating in step 2 was adjusted from 150°C to 320°C. A pyrosulfate-boron trifluoride composite lithium salt was obtained and denoted as 2.7# lithium salt.

After IC test, a content of $SO_3$ in lithium pyrosulfate solid was 721 ppm. A chromaticity of the 2.7# lithium salt was tested by a colorimeter and the chromaticity of the 2.7# lithium salt was 89.3 Hazen.

The peak area of the NMR F spectrum was integrated and calculated. In the 2.7# lithium salt, excluding the amount of dimethyl carbonate, the mass percent of compound as shown in formula (I-1, and M was Li) was 89.5 wt%, and the mass percent of compound as shown in formula (I-2, and M was Li) was 10.5 wt%. Furthermore, an area integration conversion was performed via the B spectrum, and a calculation result of the B spectrum were consistent with that of the F spectrum, indicating a high level of reliability in the calculation result.

Comparative embodiment 2.3

The present preparation embodiment was substantially the same as embodiment 2.6, excepting that calcination temperature in step 2 was adjusted from 150°C to 320°C. A pyrosulfate-boron trifluoride composite lithium salt was obtained and denoted as 2.2# sodium salt.

After IC test, a $SO_3$ content in lithium pyrosulfate solid was 813 ppm. A chromaticity of the 2.2# sodium salt was tested by a colorimeter and the chromaticity of the 2.2# sodium salt was 98.4 Hazen.

The peak area of the NMR F spectrum is integrated and calculated. In the 2.2# sodium salt, excluding the amount of dimethyl carbonate, the mass percent of compound as shown in formula (I-1, and M was Na) was 80.2wt%, and the mass percent of compound as shown in formula (I-2, and M was Na) was 19.8 wt%. Furthermore, an area integration conversion was performed via the B spectrum, and a calculation result of the B spectrum were consistent with that of the F spectrum, indicating a high level of reliability in the calculation result.

Comparing experimental results of embodiment 2.1 to embodiment 2.5 with the comparative embodiment 2.1, it can be seen that, comparing with a preparation route using disilyl sulfate and lithium hexafluorophosphate as raw materials, the content of $SO_3$ in pyrosulfate-boron trifluoride composite lithium salt prepared by using lithium sulfate as a raw material is lower ($SO_3$ in lithium pyrosulfate solid is transferred to pyrosulfate-boron trifluoride composite lithium salt during a synthesis process), and a chromaticity of a product was lower.

Second, electrolyte solution

A fundamental electrolyte solution 2.1 was prepared as follows. In a glove box filled with argon gas (a content of the moisture was less than 5 ppm, and a content of the oxygen was less than 10 ppm), ethylene carbonate (EC), ethylmethyl carbonate (EMC), and diethyl carbonate (DEC) were uniformly mixed in a mass ratio of EC: EMC: DEC being 4: 4: 2. Lithium hexafluorophosphate ($LiPF_6$) was slowly added to a mixed solution until a molar concentration of $LiPF_6$ was 1.2 mol/L. The fundamental electrolyte solution 2.1 was obtained.

A fundamental electrolyte solution 2.2 was prepared as follows. In a glove box filled with argon gas (a content of the moisture was less than 5 ppm, and a content of the oxygen was less than 10 ppm), ethylene carbonate (EC), ethylmethyl carbonate (EMC), and diethyl carbonate (DEC) were uniformly mixed in a mass ratio of EC: EMC: DEC being 7: 10: 1. Sodium hexafluorophosphate ($NaPF_6$) was slowly added to a mixed solution until a molar concentration of $NaPF_6$ was 1.0 mol/ L. The fundamental electrolyte solution 2.2 was obtained.

Application embodiment 2.1

0.2 wt% of 2.1# lithium salt was added to the fundamental electrolyte solution 2.1 to obtain an electrolyte solution of the present application embodiment.

Application embodiment 2.2

1 wt% of 2.1# lithium salt was added to the fundamental electrolyte solution 2.1 to obtain an electrolyte solution of the present application embodiment.

Application embodiment 2.3

2 wt% of 2.1# lithium salt was added to the fundamental electrolyte solution 2.1 to obtain an electrolyte solution of the present application embodiment.

Application embodiment 2.4

3 wt% of 2.1# lithium salt was added to the fundamental electrolyte solution 2.1 to obtain an electrolyte solution of the present application embodiment.

Application embodiment 2.5

1 wt% of 2.2# lithium salt was added to the fundamental electrolyte solution 2.1 to obtain an electrolyte solution of the present application embodiment.

Application embodiment 2.6

1 wt% of 2.3# lithium salt was added to the fundamental electrolyte solution 2.1 to obtain an electrolyte solution of the present application embodiment.

Application embodiment 2.7

1 wt% of 2.4# lithium salt was added to the fundamental electrolyte solution 2.1 to obtain an electrolyte solution of the present application embodiment.

Application embodiment 2.8

1 wt% of 2.5# lithium salt was added to the fundamental electrolyte solution 2.1 to obtain an electrolyte solution of the present application embodiment.

Application embodiment 2.9

1 wt% of 2.1# lithium salt and 1 wt% of vinylene carbonate (VC) were added to the fundamental electrolyte solution 2.1 to obtain an electrolyte solution of the present application embodiment.

Application embodiment 2.10

1 wt% of 2.1# lithium salt and 1 wt% of 1,3-propanesultone (PS) was added to the fundamental electrolyte solution 2.1 to obtain an electrolyte solution of the present application embodiment.

Application embodiment 2.11

1 wt% of 2.1# lithium salt and 1 wt% of vinyl sulfate (DTD) were added to the fundamental electrolyte solution 2.1 to obtain an electrolyte solution of the present application embodiment.

Application embodiment 2.12

1 wt% of 2.1# sodium salt was added to the fundamental electrolyte solution 2.2 to obtain an electrolyte solution of the present application embodiment.

Comparative application embodiment 2.1

1 wt% of 2.6# lithium salt was added to the fundamental electrolyte solution 2.1 to obtain an electrolyte solution of the present comparative application embodiment.

Comparative application embodiment 2.2

1 wt% of 2.7# lithium salt was added to the fundamental electrolyte solution 2.1 to obtain an electrolyte solution of the present comparative application embodiment.

Comparative application embodiment 2.3

The fundamental electrolyte solution 2.1 was not processed to obtain an electrolyte solution of the present comparative application embodiment.

Comparative application embodiment 2.4

1 wt% of 2.2# sodium salt was added to the fundamental electrolyte solution 2.2 to obtain an electrolyte solution of the present comparative application embodiment.

Comparative application embodiment 2.5

The fundamental electrolyte solution 2.2 was not processed to obtain an electrolyte solution of the present embodiment.

Second, electrochemical performance test

Pouch lithium-ion batteries with a capacity of 1260 mAh were made from the electrolyte solutions obtained in the

above application embodiment 2.1 to application embodiment 2.11 and comparative application embodiment 2.1 to comparative application embodiment 2.3, respectively. The pouch lithium-ion batteries included positive electrode plates, negative electrode plates, membranes, electrolyte solutions, and battery accessories. The active material of the positive electrode was a ternary material of the positive electrode ($LiNi_{0.6}Co_{0.2}Mn_{0.2}O_2$), and the active material of the negative electrode is high-capacity graphite. A process of preparing the pouch lithium-ion batteries was as follows: the positive electrode plates, the membranes, and the negative electrode plates were wound together to form a core and sealed by an Al-plastic film and roasted, such that the moisture content of the electrode met requirements. After roasting, a lithium-ion battery cell was injected by the electrolyte solutions, and a finished pouch battery cell was obtained via processes such as static placement, chemical transformation, capacity division, and aging.

Pouch Sodium-ion batteries with a capacity of 1260 mAh were made of the electrolyte solution of the above application embodiment 2.12, and application embodiment 2.4 to comparative embodiment 2.5, respectively. The pouch sodium-ion batteries included positive electrode plates, negative electrode plates, membranes, electrolyte solutions, and battery accessories. The active material of the positive electrode was a ternary material of the positive electrode ($NaNi_{0.33}Fe_{0.33}Mn_{0.33}O_2$), and the active material of the negative electrode was hard carbon. A process of preparing the pouch sodium-ion batteries was as follows: the positive electrode plates, the membranes, and the negative electrode plates were wound together to form a core and sealed by an Al-plastic film and roasted, such that the moisture content of the electrode met requirements. After roasting, a battery cell was injected by the electrolyte solutions, and a finished pouch battery cell was obtained via processes such as static placement, chemical transformation, capacity division, and aging.

A performance of the above obtained pouch lithium-ion batteries and sodium-ion batteries was tested. The test voltage was in a range of 2.8 V to 4.2 V. The performance test included following tests.

(1) High-temperature storage performance test at 60 °C. Batteries were charged into 100% state of charge (SOC) and stored in an oven at 60 ± 2°C for 28 days. Sizes of the batteries before and after storage were tested, a volume expansion rate of each of the batteries before and after storage at 60 °C was obtained. A value of direct current resistance (DCR) after the storage was tested at room temperature, a percentage of the value of DCR after the storage to a value of an initial DCR was calculated, which was defined as a discharge DCR change rate.

(2) Cycling performance test at a high-temperature of 45 °C: the batteries were circulations of charging at a current of 1C and discharging at a current of 1C in an oven at 45 ± 1 °C, and a discharge capacity of each circulation was calculated, the circulation was repeated for 500 times, and a capacity retention rate of each of the batteries after the cycle was calculated.

(3) Test of discharge performance at a low-temperature of -20°C: the batteries were discharged at a discharge current of 1C to 80% of a lower limit voltage of the battery in an oven at -20 ± 1 °C, the capacity was defined as a low-temperature discharge capacity, percentage of the discharge capacity to the 1C discharge capacity at 25 °C was calculated and defined as a low-temperature discharge capacity retention rate.

Table 2 electrochemical performance test results

| Application embodiment/ Comparative application embodiment | Additive | | Initial discharge DCR at 25 °C /mΩ | High-temperature storage at 60°C for 28 days | | Cycle was repeated for 500 weeks at 45°C | Low-temperatu re discharge at -20°C |
|---|---|---|---|---|---|---|---|
| | | | | Volume expansio n rate % | change rate of discharge DCR % | Capacity retention rate % | Capacity retention rate % |
| Application embodiment 2.1 | 0.2% 2.1# lithium salt | / | 22.6 | 9.1 | 88.2 | 87.8 | 87.5 |
| Application embodiment 2.2 | 1% 2.1# lithium salt | / | 21.7 | 7.7 | 86.9 | 89.8 | 88.9 |
| Application embodiment 2.3 | 2% 2.1# lithium salt | / | 22.0 | 7.7 | 87.0 | 87.0 | 88.1 |

(continued)

| Application embodiment/ Comparative application embodiment | Additive | | Initial discharge DCR at 25 °C /mΩ | High-temperature storage at 60°C for 28 days | | Cycle was repeated for 500 weeks at 45°C | Low-temperatu re discharge at -20°C |
|---|---|---|---|---|---|---|---|
| | | | | Volume expansio n rate % | change rate of discharge DCR % | Capacity retention rate % | Capacity retention rate % |
| Application embodiment 2.4 | 3% 2.1# lithium salt | / | 22.4 | 8.1 | 88.0 | 87.4 | 88.0 |
| Application embodiment 2.5 | 1% 2.2# lithium salt | / | 24.5 | 8.6 | 88.9 | 87.9 | 88.5 |
| Application embodiment 2.6 | 1% 2.3# lithium salt | / | 24.4 | 8.9 | 87.3 | 87.3 | 88.5 |
| Application embodiment 2.7 | 1% 2.4# lithium salt | / | 24.6 | 10.1 | 91.1 | 86.5 | 88.3 |
| Application embodiment 2.8 | 1% 2.5# lithium salt | / | 24.8 | 10.9 | 91.8 | 86.2 | 88.1 |
| Application embodiment 2.9 | 1% 2.1# lithium salt | 1% VC | 21.6 | 7.1 | 68.3 | 90.2 | 88.9 |
| Application embodiment 2.10 | 1% 2.1# lithium salt | 1% PS | 21.7 | 6.5 | 79.5 | 90.1 | 88.5 |
| Application embodiment 2.11 | 1% 2.1# lithium salt | 1% DTD | 21.2 | 7.2 | 69.9 | 86.0 | 87.1 |
| Application embodiment 2.12 | 1% 2.1# sodium salt | / | 28.5 | 13.2 | 95.6 | 82.4 | 79.8 |
| Comparative application embodiment 2.1 | 1% 2.6# lithium salt | / | 29.1 | 12.2 | 107.6 | 79.1 | 80.4 |
| Comparative application embodiment 2.2 | 1% 2.7# lithium salt | / | 27.5 | 10.8 | 97.2 | 82.5 | 82.5 |
| Comparative application embodiment 2.3 | / | / | 34.5 | 16.8 | 120 | 71.5 | 76.5 |
| Comparative application embodiment 2.4 | 1% 2.2# sodium salt | / | 34.9 | 17.2 | 115.6 | 72.4 | 69.8 |
| Comparative application embodiment 2.5 | / | / | 38.7 | 20.5 | 125.4 | 60.4 | 61.5 |

According to the above Table 2, comparing the application embodiment 2.2, the application embodiment 2.5 to the application embodiment 2.8 with the comparative application embodiment 2.1 to the comparative application embodiment 2.3, or comparing the application embodiment 2.12 with comparative application embodiment 2.4 and the comparative application embodiment 2.5, the pyrosulfate-boron trifluoride composite metal salt obtained by using a low-$SO_3$ content pyrosulfate as a raw material had low chromaticity, and might inhibit each of the batteries to generate gas during the high-temperature storage and inhibit impedance growth of each of the batteries, and improved the low-temperature performance of each of the batteries.

Furthermore, compared the application embodiment 2.2, the application embodiment 2.7 with the comparative application embodiment 2.2, it could be concluded that as a calcination temperature increased, both the content of $SO_3$ in lithium pyrosulfate and the chromaticity of the prepared lithium pyrosulfate boron trifluoride composite salt increased, and the electrochemical performance of lithium-ion battery electrolyte solutions decreased. The reason was that since the calcination temperature increased, a part of lithium pyrosulfate decomposed to generate $SO_3$, resulting in an increased content of $SO_3$ in the prepared pyrosulfate-boron trifluoride composite metal salt. $SO_3$ promoted side reactions of electrolyte solution or electrode in each of the batteries, resulting in a decrease of electrochemical performance of each of the batteries.

Comparing the application embodiment 2.2 and the application embodiment 2.9, it could be seen that the 2.1# lithium salt and VC were added to the electrolyte solutions, it can not only avoid a defect of VC increasing the initial impedance of each of the batteries, but also further improve the high-temperature storage performance and cycling performance of each of the batteries. Comparing the application embodiment 2.2 and the application embodiment 2.10, when the 2.1# lithium salt and PS were added to the electrolyte solutions at the same time, not only PS might greatly inhibit each of the batteries to generate gas during the high-temperature storage, it might also avoid the defects of PS increasing the initial impedance of each of the batteries and deteriorating the low-temperature performance of each of the batteries.

Comparing the application embodiment 2.1 to the application embodiment 2.4, it can be seen that, as an amount of the 2.1# lithium salt increased, the comprehensive performance of the battery was gradually improved within a certain additive range. But when the amount was further increased, the performance of the battery cannot be further improved, and an optimal additional amount was in a range of about 1 wt% to about 2 wt%.

In a third aspect of embodiments in the present invention, a high-voltage fast-charging lithium-ion secondary battery based on an interaction effect of pyrosulfate-boron trifluoride composite lithium salt and the active material of the negative electrode was provided.

In following embodiments and comparative embodiments of the present invention, novel composite lithium salts included following types of composite lithium salts:

a composite lithium salt A1 containing 95 wt% of compound II-1 and 5 wt% of compound II-2; and
a composite lithium salt A2 containing 90 wt% of compound II-1, 6 wt% of compound II-2 and 4 wt% of compound II-3.

The active material of the negative electrodes such as natural graphite, artificial graphite, hard carbon, silicon, silicon suboxide, and the like were purchased from Ningbo Shanshan Co., Ltd.

Embodiment 3.1

The present embodiment provided a method for preparing a lithium-ion secondary battery. The method includes the following steps.

Preparation of a positive electrode plate:

An active material of the positive electrode lithium nickel cobalt manganese oxide $LiNi_{0.7}Co_{0.2}Mn_{0.1}O_2$, conductive carbon black Super-P, and binder polyvinylidene fluoride (PVDF) were mixed in a mass ratio of 93: 4: 3 and then dispersed in N-methyl-2-pyrrolidone (NMP) to obtain a positive electrode slurry. The positive electrode slurry was coated evenly on both sides of an aluminum foil current collector, and after drying, rolling, and vacuum drying, preparing an aluminum lead wire with an ultrasonic welding machine on the aluminum foil current collector to obtain the positive electrode plate.

Preparation of a negative electrode plate:

An active material of the negative electrode, conductive carbon black, binder styrene butadiene rubber (SBR), and carboxymethyl cellulose (CMC) were mixed in a mass ratio of 92: 2: 3: 3 and then dispersed in deionized water to obtain a negative electrode slurry. The negative electrode slurry was coated on both sides of a copper foil current collector, and after drying, rolling, and vacuum drying, preparing a nickel lead wire with the ultrasonic welding machine on the copper

foil current collector to obtain the negative electrode plate. Hard carbon with a specific surface area of 20$m^2$/g was selected as the active material of the negative electrode.

Preparation of a battery cell:

A polyethylene microporous membrane with a thickness of 20 μm was placed as a membrane between the positive electrode and the negative electrode, and then a sandwich structure composed of the positive electrode plate, negative electrode plate, and the membrane was rolled. After providing an electrode tab, the sandwich structure was sealed in an aluminum-plastic membrane, so as to obtain a pouch lithium-ion battery cell with a capacity of 1000 mAh. The pouch lithium-ion battery was provided without the electrolyte solution.

Preparation of electrolyte solution:

Ethylene carbonate (EC), diethyl carbonate (DEC), and methyl ethyl carbonate (EMC) were mixed in a mass ratio of EC: DEC: EMC being 3: 2: 5, and then lithium hexafluorophosphate ($LiPF_6$) and lithium difluorosulfonylimide (LiFSI) were added to molar concentrations of 0.75 mol/L and 0.25 mol/L, respectively, thereby forming a fundamental electrolyte solution. The composite lithium salt A1 was added into the electrolyte solution, and a mass percent of the composite lithium salt A1 was 5.0 % of that of the electrolyte solution.

Injection of the electrolyte solution and formation of the battery cell:

The electrolyte solution prepared in the present embodiment was injected into the battery cell in a glove box with a moisture content less than 10 ppm, ensuring that the electrolyte solution was sufficient to fully fill a gap in the battery cell. The battery cell was formed by following steps: the battery cell was charged at a constant current of 0.01 C for 30 minutes, charged at a constant current of 0.02 C for 60 minutes, charged at a constant current of 0.05 C for 90 minutes, and charged at a constant current of 0.1 C for 240 minutes, then stood for 1 h, shaped and sealed, and then charged at a constant current of 0.2 C to 4.40 V, stood at room temperature for 24 h, and discharged at a constant current of 0.2 C to 3.0 V.

The composite salt and the content thereof and the active material of the negative electrode and the content thereof in the electrolyte changed based on embodiment 3.1, other operations were the same. A lithium-ion secondary battery was prepared with the electrolyte solutions and active materials of the negative electrodes shown in Table 3.

Table 3 formula table of electrolyte solutions and active material of the negative electrodes

| Embodiment/ Comparative embodiment | Fundamental electrolyte solution/% | Composite lithium salt and content thereof /% | active material of the negative electrode and content thereof | | | | | |
|---|---|---|---|---|---|---|---|---|
| | | | Name | Specific surface area/$m^2$/g | Amount/ % | Name | Specific surface area $m^2$/g | Amount /% |
| Embodiment 3.1 | 95.00 | 5.0% A1 | Hard carbon | 20.0 | 100.0 | / | / | / |
| Embodiment 3.2 | 99.98 | 0.02% A1 | Hard carbon | 0.1 | 100.0 | / | / | / |
| Embodiment 3.3 | 98.00 | 2.0% A1 | Hard carbon | 10.0 | 100.0 | / | / | / |
| Embodiment 3.4 | 99.90 | 0.1% A1 | Hard carbon | 0.5 | 100.0 | / | / | / |
| Embodiment 3.5 | 99.00 | 1.0% A1 | Hard carbon | 2.0 | 0.1 | Artificial graphite | 1.2 | 99.9 |
| Embodiment 3.6 | 99.00 | 1.0% A1 | Hard carbon | 2.0 | 5.0 | Artificial graphite | 1.2 | 95.0 |
| Embodiment 3.7 | 99.00 | 1.0% A1 | Hard carbon | 3.2 | 5.0 | Natural graphite | 1.0 | 95.0 |
| Embodiment 3.8 | 99.00 | 1.0% A1 | Hard carbon | 2.8 | 20.0 | Silicon | 3.0 | 80.0 |

(continued)

| Embodiment/ Comparative embodiment | Fundamental electrolyte solution/% | Composite lithium salt and content thereof /% | active material of the negative electrode and content thereof | | | | | |
|---|---|---|---|---|---|---|---|---|
| | | | Name | Specific surface area/$m^2$/g | Amount/ % | Name | Specific surface area $m^2$/g | Amount /% |
| Embodiment 3.9 | 99.00 | 1.0% A1 | Hard carbon | 2.0 | 20.0 | Silicon suboxide | 5.0 | 80.0 |
| Embodiment 3.10 | 98.90 | 1.1% A2 | Hard carbon | 2.0 | 5.0 | Artificial graphite | 1.2 | 95.0 |
| Embodiment 3.11 | 99.90 | 0.1% A2 | Hard carbon | 2.0 | 5.0 | Artificial graphite | 1.2 | 95.0 |
| Embodiment 3.12 | 98.00 | 2.0% A2 | Hard carbon | 2.0 | 5.0 | Artificial graphite | 1.2 | 95.0 |
| Embodiment 3.13 | 98.90 | 1.1% A2 | Hard carbon | 5.0 | 5.0 | Artificial graphite | 1.2 | 95.0 |
| Embodiment 3.14 | 98.90 | 1.1% A2 | Hard carbon | 1.0 | 20.0 | Artificial graphite | 0.8 | 80.0 |
| Embodiment 3.15 | 99.00 | 1.0% A2 | Artificial graphite | 1.2 | 100.0 | / | / | / |
| Embodiment 3.16 | 99.00 | 1.0% A2 | Natural graphite | 1.0 | 100.0 | / | / | / |
| Embodiment 3.17 | 99.00 | 1.0% A2 | Silicon | 3.0 | 100.0 | / | / | / |
| Embodiment 3.18 | 99.00 | 1.0% A2 | Silicon suboxide | 5.0 | 100.0 | / | / | / |
| Comparative embodiment 3.1 | 100.00 | / | Hard carbon | 20.0 | 100.0 | / | / | / |
| Comparative embodiment 3.2 | 100.00 | / | Hard carbon | 0.1 | 100.0 | / | / | / |
| Comparative embodiment 3.3 | 95.00 | 5.0% A1 | Hard carbon | 0.05 | 100.0 | / | / | / |
| Comparative embodiment 3.4 | 95.00 | 5.0% A1 | Hard carbon | 30.0 | 100.0 | / | / | / |
| Comparative embodiment 3.5 | 99.00 | 1.0% LiDFP | Hard carbon | 2.0 | 5.0 | Artificial graphite | 1.2 | 95.0 |
| Comparative embodiment 3.6 | 99.99 | 0.01%A2 | Hard carbon | 2.0 | 5.0 | Artificial graphite | 1.2 | 95.0 |
| Comparative embodiment 3.7 | 94.00 | 6.0%A2 | Hard carbon | 2.0 | 5.0 | Artificial graphite | 1.2 | 95.0 |

A formulation of the electrolyte solution was adjusted on the basis of embodiment 3.6. The active material of the negative electrode and the content thereof were the same, and other operations were the same. A lithium-ion secondary

battery was prepared according to the formulation of electrolyte solutions in Table 4.

Table 4 Formulation of electrolyte solutions

| Embodiment/ Comparative embodiment | Fundamental electrolyte solution/% | Composite lithium salt and content thereof /% | Fundamental additive | | | | | | | | | |
|---|---|---|---|---|---|---|---|---|---|---|---|---|
| | | | Name | Amount /% | Name | Amount /% | Name | Amount /% | Name | Amount /% | Name | Amount /% |
| **Embodiment 3.19** | 96.90 | 0.5% A1 | FEC | 0.1 | DTD | 2.0 | TMSP | 0.5 | LiDFOB | / | LiDFP | / |
| **Embodiment 3.20** | 97.00 | 0.2% A1 | | 0.5 | | 1.5 | | 0.8 | | / | | / |
| **Embodiment 3.21** | 97.30 | 1.0% A1 | | 0.2 | | 1 | | 0.5 | | / | | / |
| **Embodiment 3.22** | 98.10 | 1.0% A1 | | / | | / | | / | | 0.1 | | 0.8 |
| **Embodiment 3.23** | 98.30 | 1.0% A1 | | / | | / | | / | | 0.2 | | 0.5 |

**Second, electrochemical performance tests**

The performances of the above lithium-ion secondary batteries were tested, and the tests were shown herein.

(1) Test of the alternating-current (AC) impedance

The test was conducted at a room temperature of 25 °C. An SOC (state of charge) vale of the lithium-ion secondary battery was adjusted to 50%, and then an electrochemical workstation with a function of testing a electrochemical impedance spectroscopy was used to perform AC impedance test on the lithium-ion secondary battery. An initial frequency of the test was 10000 Hz, a cut-off frequency of the test was 0.01 Hz, a disturbance voltage of the test was ± 0.01 V, and test points were not less than 60. The impedance data $Z_n$ (*n* represented test frequencies) at each of test frequencies was obtained, and a ratio c% of the AC impedance between 1 Hz to 0.01 Hz and 10000 Hz to 0.01 Hz was calculated according to the following formula:

$$c\% = (Z_{0.01}-Z1) / (Z_{0.01}-Z_{10000}) \times 100\%.$$

The ratio mainly included a proportion of a diffusion impedance to the impedance of the battery, and a proportion of a charge migration impedance to the battery impedance.

(2) Test of the low-temperature performance

① Test of a low-temperature discharge capacity: the lithium-ion secondary battery was charged to 4.45 V at a constant current of 1 C and at the room temperature (25 °C), and charged at a constant voltage until the current lowered to 0.05 C, and then discharged to 2.8 V at a constant current of 1 C, and a discharge capacity at the room temperature was defined as C1. The above charging steps were repeated until the lithium-ion secondary battery was charged to 4.45 V, then an environment temperature was lowered to -20 °C, the battery was placed at the environment temperature for 5 h to achieve a purpose of cooling the battery. Subsequently, the lithium-ion secondary battery was discharged to 2.5 V at a constant current of 0.5 C and a discharge capacity was defined as C2. A capacity retention ratio of the lithium-ion secondary battery was defined as R1, and the capacity retention ratio of the lithium-ion secondary battery R1 satisfied the following formula:

$$R1 = C2 / C1 * 100\%.$$

② Test of a low-temperature DCIR impedance: test of the fast-charging performance: the SOC value of the lithium-ion secondary battery was adjusted to 50% at the room temperature (25 °C) with a current of 0.2 C, then the environment temperature was lowered to -20 °C, the lithium-ion secondary battery was placed at the environment temperature for 5 h to cool the lithium-ion secondary battery. Subsequently, the lithium-ion secondary battery was discharged with a constant current of 1 C (defined as I1) for 30 seconds, a voltage value of the last 1 second of the storage was defined as V1, and the voltage value of the 30th second in the discharging process was defined as V2. The low-temperature DCIR impedance was defined as R2, and the low-temperature DCIR impedance R2 was calculated according to the following formula:

$$R2 = (V1-V2) / I1$$

(3) Test of charge rate performance

The lithium-ion secondary battery was charged at a constant current rate of 4 C at the room temperature (25 °C) to a cut-off voltage of 4.45 V, and then charged at a constant voltage until the current lowered to 0.1 C. A total charging capacity was defined as C3,a constant current charging capacity was defined as C4 were recorded, and a constant current charging ratio of the battery was defined as R3. The constant current charging ratio R3 of the battery was calculated according to the following formula:

$$R3 = C4 / C3 \times 100\%.$$

Test results were shown in Table 5 hereinafter.

Table 5 test results of electrical chemical tests

| Embodiment/ Comparative embodiment | AC impedance test | Low-temperature performance test | | Charge rate performance test |
|---|---|---|---|---|
| | Ratio c% of AC impedance in different frequencies | Capacity retention rate R1/% | Low-temperature DCIR impedance R2/mOhm | Constant current charging ratio R3/% |
| Embodiment 3.1 | 78.17 | 70.02 | 73.87 | 76.86 |
| Embodiment 3.2 | 79.38 | 71.13 | 72.78 | 78.70 |
| Embodiment 3.3 | 72.47 | 79.90 | 63.00 | 83.92 |
| Embodiment 3.4 | 70.26 | 81.88 | 61.60 | 84.31 |
| Embodiment 3.5 | 77.05 | 73.44 | 71.46 | 79.89 |
| Embodiment 3.6 | 66.76 | 89.44 | 54.89 | 90.66 |
| Embodiment 3.7 | 68.38 | 86.18 | 57.71 | 88.04 |
| Embodiment 3.8 | 69.88 | 84.76 | 58.05 | 86.79 |
| Embodiment 3.9 | 70.12 | 82.56 | 59.70 | 85.78 |
| Embodiment 3.10 | 66.39 | 89.53 | 54.62 | 90.15 |
| Embodiment 3.11 | 72.00 | 79.00 | 63.63 | 83.26 |
| Embodiment 3.12 | 66.43 | 88.16 | 54.45 | 89.95 |
| Embodiment 3.13 | 69.34 | 84.37 | 58.01 | 86.52 |
| Embodiment 3.14 | 66.71 | 89.59 | 54.86 | 89.81 |
| Embodiment 3.15 | 75.97 | 75.38 | 69.61 | 80.33 |
| Embodiment 3.16 | 77.62 | 73.40 | 71.40 | 79.91 |
| Embodiment 3.17 | 79.29 | 70.26 | 73.27 | 76.23 |
| Embodiment 3.18 | 78.50 | 71.07 | 72.83 | 78.93 |
| Embodiment 3.19 | 65.53 | 89.93 | 53.51 | 92.38 |
| Embodiment 3.20 | 66.00 | 90.05 | 53.44 | 92.17 |
| Embodiment 3.21 | 65.75 | 89.96 | 53.89 | 92.37 |
| Embodiment 3.22 | 66.14 | 89.25 | 54.37 | 91.88 |
| Embodiment 3.23 | 66.30 | 89.01 | 53.84 | 91.33 |
| Comparative embodiment 3.1 | 90.27 | 62.92 | 92.70 | 70.63 |
| Comparative embodiment 3.2 | 93.16 | 58.49 | 108.93 | 64.59 |
| Comparative embodiment 3.3 | 88.64 | 65.49 | 85.10 | 72.59 |
| Comparative embodiment 3.4 | 85.69 | 68.08 | 80.56 | 74.89 |
| Comparative embodiment 3.5 | 81.33 | 70.03 | 75.19 | 76.68 |
| Comparative embodiment 3.6 | 80.02 | 72.79 | 73.10 | 78.24 |
| Comparative embodiment 3.7 | 82.56 | 69.27 | 75.91 | 75.05 |

Comparing the data of embodiments 3.1 and 3.2 with the data of the comparative embodiments 3.1 and 3.2 in Table 5, it could be concluded that under conditions that a material of the negative electrode with a certain specific surface area was applied in the lithium-ion secondary battery, an electrolyte solution containing 0.02 wt% to 5.0 wt% of a novel

composite lithium salt was required to obtain an interaction effect of a certain negative electrode and the electrolyte solution, thereby reducing a proportion of diffusion impedance of the battery and a proportion of charge migration impedances of the battery, and improving fast-charging performance of the battery and low-temperature performances of the battery under high-voltage.

Comparing the data of embodiment 3.6 to the data of comparative embodiment 3.5 in Table 5, the fast-charging performance and low-temperature performance of the lithium-ion secondary battery may be improved only when a lithium salt additive was the composite lithium salt additive provided in the present invention.

Comparing the data of embodiments 3.1 to 3.4 with the data of comparative embodiments 3.3 to 3.4 in Table 5, on condition that a certain electrolyte solution additive was applied in the lithium-ion secondary batteries, the active material of the negative electrode with a specific surface area of 0.1 $m^2/g$ to 20.0 $m^2/g$ was used, the interaction effect of the specific negative electrode and the electrolyte solution may be played, so as to reduce a proportion of diffusion impedance and a proportion of charge migration impedance of the lithium-ion secondary batteries, and improve the fast-charging performance and low-temperature performance of the lithium-ion secondary batteries under high-voltage. If the specific surface area of the active material of the negative electrode was too small, active sites on the active material of the negative electrode was too few, which is conducive adverse to an occurrence of negative electrode electrolyte interaction reactions. When the specific surface area of the active material of the negative electrode was too great, the novel composite lithium salt was insufficient to participate in an interface phase interaction reaction between the negative electrode and the electrolyte solution, thereby affecting stability of the interface phase.

Comparing the data of embodiment 3.1 to the data of embodiment 3.4 or the data of embodiment 3.10 to the data of embodiment 3.12, when an amount of the novel composite lithium salt was further reduced to the range of 0.1 wt% to 2.0 wt%, the fast-charging performance of the lithium-ion secondary batteries and the low-temperature performance of the lithium-ion secondary batteries were further improved.

Comparing the data of embodiment 3.1 to the data of embodiment 3.4 or the data of embodiment 3.10, the data of embodiment 3.13 to the data of embodiment 3.14 in Table 5, when the specific surface area of the negative electrode active was further reduced to the range of 0.5 $m^2/g$ to 10.0 $m^2/g$, the fast-charging performance and low-temperature performance of the lithium-ion secondary battery may be further improved.

In the present invention, the novel composite lithium salt can react with the active material of the negative electrode, such that the usage amount of the novel composite lithium salt and the specific surface area of the active material of the negative electrode were influenced each other. When the specific surface area of the active material of the negative electrode changed within the scope of the present invention, usage amount of the novel composite lithium salt was required be changed accordingly within the scope of the present invention to match a best performance of the active material of the negative electrode.

Comparing embodiment 3.10, comparative embodiment 3.5 to comparative embodiment 3.6 in Table 5, and following conclusions were obtained. Under conditions that a certain type of the negative electrode material with a certain specific surface area was used, when an unduly small amount of the novel composite lithium salt was added, it was not easy to form a dense and permeable interface phase. Thus, other lithium salts and/or solvents in the electrolyte solution might participate in the interface phase film formation reaction, resulting in increasing the interface impedance, which had adverse effects on fast-charging performance and low-temperature performance of the lithium-ion secondary batteries. When an unduly large amount of novel composite lithium salt was added, it was prone to form an overly dense interface phase during a battery manufacturing process, which has adverse effect on migration of lithium-ions and the fast-charging performance of the lithium-ion secondary batteries and the low-temperature performance of the lithium-ion secondary batteries.

Comparing the data of embodiment 3.5 to the data of embodiment 3.9 and embodiment 3.15 to embodiment 3.18 in Table 5, it can be concluded that when the hard carbon was used as one of the negative electrode material, an ion conductivity of the negative electrode can be improved and a more stable and permeable lithium-ion transport channel with the novel composite lithium salt was created, thereby further improving the fast-charging and low-temperature performance of each of the lithium-ion secondary batteries.

Comparing the data of the embodiment 3.6 and the data of the embodiment 3.19 to the embodiment 3.21 in Table 5, it can be concluded that by adding 0.1 wt % to 2.0 wt% of different types of other lithium salts to the fundamental electrolyte solution, the fast-charging performance of the lithium-ion secondary batteries and the low-temperature performance of the lithium-ion secondary batteries can be improved.

Comparing the data of embodiment 3.6 with the data of embodiment 3.22 to the embodiment 3.23 in table 5, it can be concluded that by adding 0.1 wt % to 2.0 wt% of different types of fundamental additives to the fundamental electrolyte solution, the fast-charging performance of the lithium-ion secondary batteries and the low-temperature performance of the lithium-ion secondary batteries can be improved.

**Claims**

**1.** A use of a pyrosulfate-boron trifluoride composite metal salt in an electrolyte solution, comprising:

adding the pyrosulfate-boron trifluoride composite metal salt as shown in either or both of formula (I) and formula (II) into the electrolyte solution:

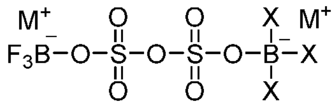

formula (I),

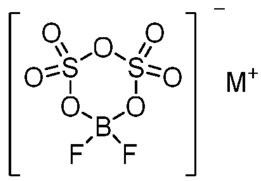

formula (II),

in formula (I), M is selected from Li or Na; X is independently selected from F or a substituent group as shown in formula (A):

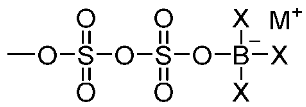

formula (A),

in formula (A), M is selected from Li or Na, X is independently selected from F or formula (A), until X is F;
a mass percentage of the pyrosulfate-boron trifluoride composite metal salt in the electrolyte solution is in a range of 0.1 wt% to 15.0 wt%.

**2.** The use of claim 1, wherein the mass percent of the pyrosulfate-boron trifluoride composite metal salt in the electrolyte solution is in a range of 0.2 wt% to 3.0 wt%.

**3.** The use of claim 1, wherein the pyrosulfate-boron trifluoride composite metal salt is selected from at least one of

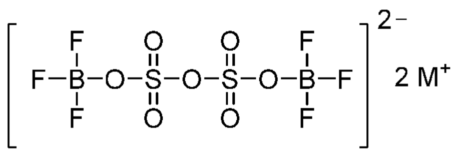

,

compound (1)

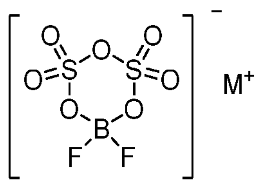

,

compound (2)

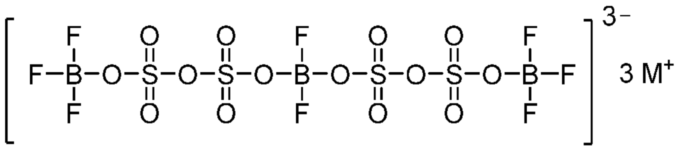

,

compound (3)

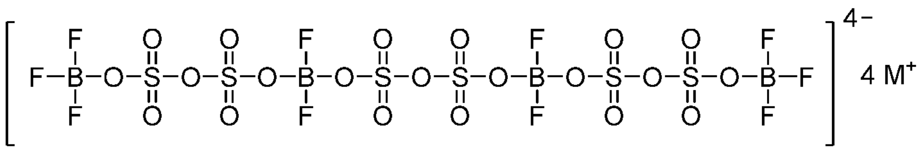

,

compound (4)

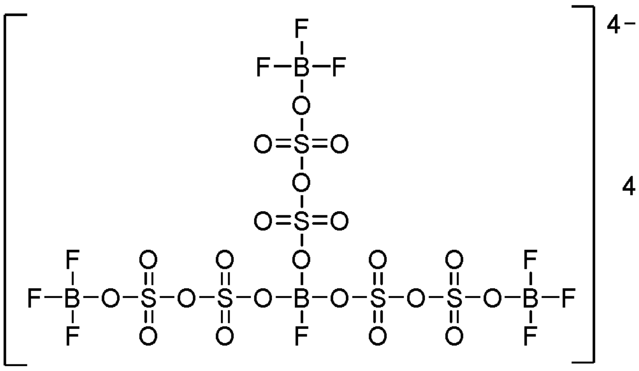

compound (5)

or

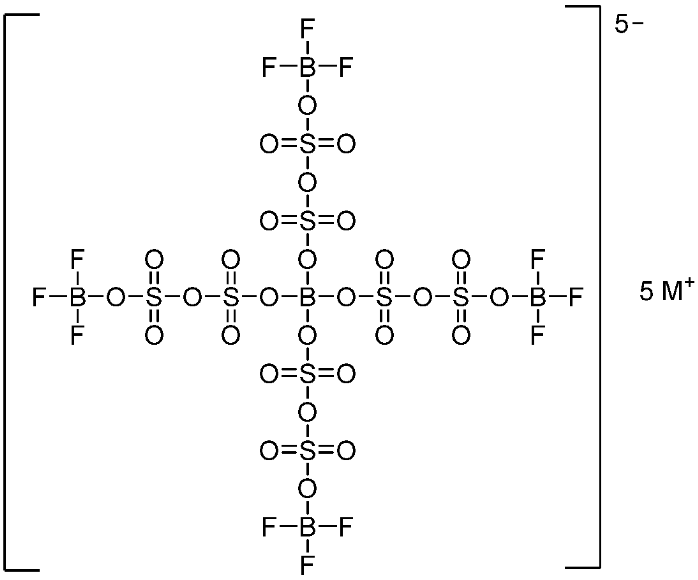

,

compound (6)

wherein M is selected from Li or Na.

**4.** The use of any one of claims 1 to 3, wherein the pyrosulfate-boron trifluoride composite metal salt is obtained by following steps:
subjecting lithium pyrosulfate or sodium pyrosulfate to react with either or both of boron trifluoride gas and boron trifluoride complex to obtain a reaction liquid of the pyrosulfate-boron trifluoride composite metal salt in a solvent.

**5.** The use of claim 4, wherein the solvent is selected from the group consisting of vinyl carbonate, propylene carbonate, dimethyl carbonate, ethylmethyl carbonate, diethyl carbonate, methyl acetate, ethyl acetate, methyl propionate, γ-butyrolactone, diethyl ether, ethylene glycol dimethyl ether, acetonitrile, phenylacetonitrile, propionitrile, and any combination thereof.

**6.** The use of claim 4, wherein the boron trifluoride complex is selected from the group consisting of boron trifluoride diethyl ether complex, boron trifluoride ethylene glycol dimethyl ether complex, boron trifluoride dimethyl carbonate complex, boron trifluoride pyridine complex, boron trifluoride ethylamine complex, boron trifluoride butyl ether complex, boron trifluoride methyl ether complex, boron trifluoride acetonitrile complex, boron trifluoride piperidine complex, boron trifluoride phenol complex, boron trifluoride tetrahydrofuran complex, boron trifluoride dimethyl sulfide complex, boron trifluoride morpholine complex, and any combination thereof.

**7.** The use of claim 4, wherein a molar ratio of lithium pyrosulfate or sodium pyrosulfate to either or both of boron trifluoride gas and boron trifluoride complex is in a range of 0.2 :1 to 1.2 :1.

**8.** The use of claim 4, wherein a temperature of the reaction between lithium pyrosulfate or sodium pyrosulfate and either or both of boron trifluoride gas and boron trifluoride complex is in a range of 10 degrees centigrade to 90 degrees centigrade, and a time of the reaction between lithium pyrosulfate or sodium pyrosulfate and either or both of boron trifluoride gas and boron trifluoride complex is in a range of 1 h to 48 h.

**9.** The use of claim 4, wherein the steps for obtaining the pyrosulfate-boron trifluoride composite metal salt further comprises:
removing the solvent and unreacted boron trifluoride in the reaction liquid of the pyrosulfate-boron trifluoride composite metal salt by method of atmospheric distillation or reduced pressure distillation to obtain the pyrosulfate-boron trifluoride composite metal salt.

**10.** The use of any one of claims 4 to 9, wherein when the temperature of the reaction between lithium pyrosulfate or sodium pyrosulfate and either or both of boron trifluoride gas and boron trifluoride complex is in a range of 10 degrees centigrade to 40 degrees centigrade, a mass percent of compound (2) in the pyrosulfate-boron trifluoride composite metal salt is greater than or equal to 50%; and when the temperature of the reaction between lithium pyrosulfate or sodium pyrosulfate and either or both of boron trifluoride gas and boron trifluoride complex is in a range of 40 degrees centigrade to 90 degrees centigrade, a mass percent of compound (1) in the pyrosulfate-boron trifluoride composite metal salt is greater than or equal to 50%.

**11.** The use of any one of claims 1 to 10, wherein the electrolyte solution further comprises a main salt, wherein the main salt is a main lithium salt or a main sodium salt, the main lithium salt is selected from the group consisting of lithium hexafluorophosphate, lithium tetrafluoroborate, lithium hexafluoroarsenate, lithium perchlorate, lithium bis(oxalate) borate, lithium difluoro(oxalate)borate, lithium bi(fluorosulfonyl)imide, lithium bis(trifluoromethylsulfonyl)imide, lithium tetrafluorooxalate phosphate, lithium trioxalate phosphate, lithium difluorobis(oxalato)phosphate, and any combination thereof; and the main sodium salt is selected from sodium hexafluorophosphate, sodium tetrafluoroborate, sodium perchlorate, sodium bi(fluorosulfonyl)imide, sodium bis(trifluoromethylsulfonyl)imide, sodium difluorophosphate, and any combination thereof;

an organic solvent, wherein the organic solvent is selected from the group consisting of $C_3$-$C_6$ carbonate compounds, $C_3$-$C_8$ carboxylic ester compounds, sulphone compounds, ether compounds, and any combination thereof; and
a fundamental additive, wherein the fundamental additive is selected from sulfonate ester compounds, sulfate ester compounds, fluorinated carbonate ester compounds, unsaturated carbonate ester compounds, fluorine-containing lithium salt, fluorine-containing sodium salt, and any combination thereof.

**12.** The use of claim 11, wherein

the main lithium salt is selected from the group consisting of lithium hexafluorophosphate, lithium tetrafluoroborate, lithium bi(fluorosulfonyl)imide, lithium bis(trifluoromethylsulfonyl)imide, and any combination thereof; and a molar concentration of the main lithium salt in the electrolyte solution is in a range of 0.1 mol/L to 4.0 mol/L;
the main sodium salt is selected from the group consisting of sodium hexafluorophosphate, sodium bi(fluorosulfonyl)imide, sodium bis(trifluoromethylsulfonyl)imide, and any combination thereof; and a molar concentration of the main sodium salt in the electrolyte solution is in a range of 0.1 mol/L to 4.0 mol/L;
the $C_3$-$C_6$ carbonate compounds are selected from the group consisting of vinyl carbonate, propylene carbonate, butylene carbonate, dimethyl carbonate, ethylmethyl carbonate, diethyl carbonate, dipropyl carbonate, methyl propyl carbonate, ethyl propyl carbonate, and any combination thereof; the $C_3$-$C_8$ carboxylic ester compounds are selected from the group consisting of γ-butyrolactone, methyl acetate, methyl propionate, methyl butyrate, ethyl acetate, ethyl propionate, ethyl butyrate, propyl acetate, propyl propionate, and any combination thereof; the sulphone compounds is selected from the group consisting of cyclobutyl sulfone, dimethyl sulfoxide, dimethyl sulfone, diethyl sulfone, and any combination thereof; the ether compounds is selected from the group consisting of triethylene glycol dimethyl ether, tetraethylene glycol dimethyl ether, and any combination thereof;
the fundamental additive is selected from the group consisting of vinylene carbonate, fluorinated vinyl carbonate, vinyl sulfate, 1,3-propanesultone, tris(trimethylsilyl) phosphate, lithium difluorophosphate, lithium bi(fluorosulfonyl)imide, lithium bis(difluoro-oxalate)phosphate, lithium bifluorooxalate borate, sodium bifluorooxalate borate, and
sodium difluorophosphate, sodium bis(fluorosulfonyl)imide, sodium bis(oxalate)difluorophosphate, and any combination thereof, and a mass percent of any one of the fundamental additives in the electrolyte solution is in a range of 0.1wt% to 5.0wt%, and the fundamental additive is different from the main salt.

**13.** A method for preparing a pyrosulfate-boron trifluoride composite metal salt with a low chromaticity, comprising

subjecting a pyrosulfate salt to a reaction with boron trifluoride gas or a boron trifluoride complex in a solvent to obtain a reaction liquid with a chromaticity of less than or equal to 50 Hazen, wherein a $SO_3$ content in the pyrosulfate salt is less than or equal to 500 ppm, the reaction liquid comprises the pyrosulfate-boron trifluoride composite metal salt as shown in formula (I-1):

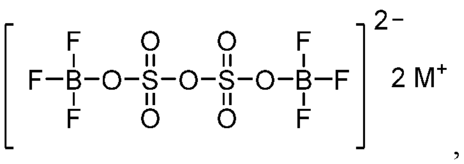

(I-1)

wherein M is selected from Li or Na.

**14.** The method of claim 13, the pyrosulfate salt is obtained by following steps:

step (1) preparing a sulfate salt, which comprises following steps: subjecting an inorganic salt to a reaction with diluted sulfuric acid to obtain a bisulfate salt, wherein the inorganic salt is selected from the group consisting of sulfate salts, metal oxides, carbonate salts, metal hydroxide, bicarbonate salts, and any combination thereof; and the bisulfate salt is selected from sodium bisulfate or lithium bisulfate;
step (2) preparing the pyrosulfate salt, which comprises following steps: subjecting a bisulfate salt solid to thermal decomposition to obtain the pyrosulfate salt, wherein the pyrosulfate salt is selected from lithium pyrosulfate or sodium pyrosulfate.

**15.** The method of claim 14, wherein in step (1), a mass concentration of the diluted sulfuric acid is in a range of 10 wt% to 65 wt%.

**16.** The method of claim 14, wherein in step (1), a molar ratio of the inorganic salt to the diluted sulfuric acid is in a range of 0.8:1 to 1.2 :1.

**17.** The method of claim 14, wherein in step (1), a temperature of the reaction is in a range of 0 to 80 degrees centigrade, and a time of the reaction is in a range of 0.5 h to 24 h.

**18.** The method of claim 14, wherein step (2) comprises a following step: calcining the bisulfate salt solid at a temperature

in a range of 100 degrees centigrade to 300 degrees centigrade for 0.5 h to 72 h to obtain the pyrosulfate salt.

**19.** The method of claim 18, wherein step (2) comprises calcining the bisulfate salt solid at a temperature in a range of 130 degrees centigrade to 250 degrees centigrade for 2 h to 36 h to obtain the pyrosulfate salt.

**20.** The method of any one of claims 13 to 19, wherein the $SO_3$ content in the pyrosulfate salt is less than or equal to 200 ppm.

**21.** The method of claim 13, wherein the reaction solvent is selected from the group consisting of vinyl carbonate, propylene carbonate, dimethyl carbonate, ethylmethyl carbonate, diethyl carbonate, methyl acetate, ethyl acetate, methyl propionate, γ-butyrolactone, diethyl ether, ethylene glycol dimethyl ether, acetonitrile, phenylacetonitrile, propionitrile, and any combination thereof.

**22.** The method of claim 13, wherein the boron trifluoride complex is selected from the group consisting of boron trifluoride diethyl ether complex, boron trifluoride ethylene glycol dimethyl ether complex, boron trifluoride dimethyl carbonate complex, boron trifluoride pyridine complex, boron trifluoride ethylamine complex, boron trifluoride butyl ether complex, boron trifluoride methyl ether complex, boron trifluoride acetonitrile complex, boron trifluoride piperidine complex, boron trifluoride phenol complex, boron trifluoride tetrahydrofuran complex, boron trifluoride dimethyl sulfide complex, boron trifluoride morpholine complex, and any combination thereof.

**23.** The method of claim 13, wherein in the reaction between the pyrosulfate salt and the boron trifluoride gas or the boron trifluoride complex, a molar ratio of the pyrosulfate salt to the boron trifluoride gas or the boron trifluoride complex is in a range of 0.33 : 1 to 1.0 : 1, and a temperature of the reaction between the pyrosulfate salt and the boron trifluoride gas or the boron trifluoride complex is in a range of 40 degrees centigrade to 70 degrees centigrade, and a time of the reaction between the pyrosulfate salt and the boron trifluoride gas or the boron trifluoride complex is in a range of 5 h to 24 h.

**24.** The method of claim 23, wherein the reaction liquid comprises at least 80 wt% of the pyrosulfate-boron trifluoride composite metal salt as shown in the formula (I-1), and the compounds as shown in at least one of formal (I-2), formal (I-3), formal (I-4), formal (I-5) or formula (I-6) make up the rest,

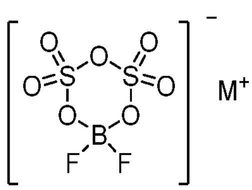

,

formula (I-2)

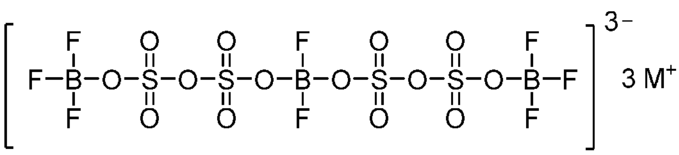

,

formula (I-3)

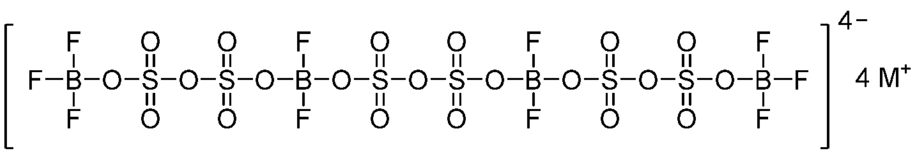

,

formula (I-4)

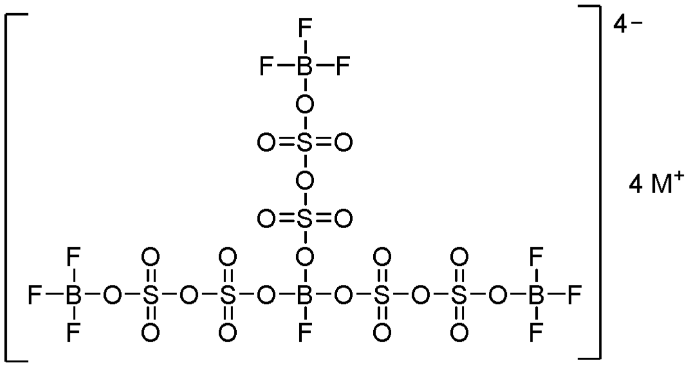

,

formula (I-5)

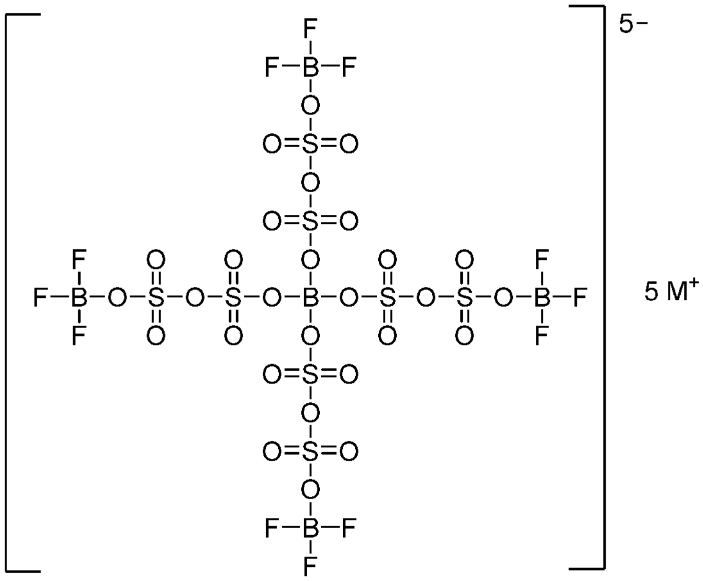

,

formula (I-6)

wherein in formula formal (I-2), formal (I-3), formal (I-4), formal (I-5) and formula (I-6), M is selected from Li or Na.

**25.** The method of claim 24, wherein the reaction liquid comprises 80 wt% to 95 wt% of the pyrosulfate-boron trifluoride composite metal salt as shown in the formula (I-1).

**26.** A use of the pyrosulfate-boron trifluoride composite metal salt with a low chromaticity prepared in any one of claims 13 to 25, comprising the steps of: adding the pyrosulfate-boron trifluoride composite metal salt with a low chromaticity into an electrolyte solution, wherein a mass percent of the pyrosulfate-boron trifluoride composite metal salt in the electrolyte solution is in a range of 0.01 wt% to 15 wt%.

**27.** A high-voltage fast-charging lithium-ion secondary battery, comprising a positive electrode, a negative electrode, a membrane and an electrolyte solution,

wherein the electrolyte solution comprises a main lithium salt, a non-aqueous solvent and an additive, wherein the additive comprises a novel composite lithium salt, the novel composite lithium salt at least comprises a pyrosulfate-boron trifluoride composite lithium salt as shown in formula (II-1),

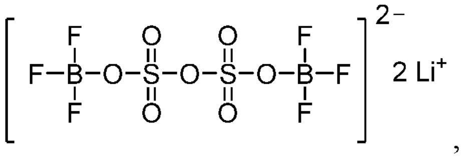

formula (II-1)

a mass percentage of the novel composite lithium salt in the electrolyte solution is in a range of 0.02 wt% to 5.0 wt%; and

the negative electrode comprises an active material which is capable of reversibly adsorbing and releasing lithium-ions, a specific surface area of the active material is in a range of 0.1 $m^2/g$ to 20.0 $m^2/g$.

**28.** The lithium-ion secondary battery of claim 27, wherein the specific surface area of the active material is in a range of 0.5 $m^2/g$ to 10.0 $m^2/g$.

**29.** The lithium-ion secondary battery of claim 27, wherein the active material of the negative electrode is selected from either or both of a carbon material and a silicon material; the carbon material is selected from the group consisting of natural graphite, synthetic graphite, hard carbon, and any combination thereof, and the silicon material is selected from either or both of silicon and silicon suboxide.

**30.** The lithium-ion secondary battery of claim 29, wherein the active material of the negative electrode at least comprises the hard carbon, and a mass percent of the hard carbon in the active material of the negative electrode is in a rage of 0.1% to 100%.

**31.** The lithium-ion secondary battery of claim 30, wherein the mass percent of the hard carbon in the active material of the negative electrode is in a rage of 5 % to 20%.

**32.** The lithium-ion secondary battery of claim 27, wherein a mass percentage of the novel composite lithium salt in the electrolyte solution is in a range of 0.1 wt% to 2.0 wt%.

**33.** The lithium-ion secondary battery of any one of claims 27 to 32, wherein an alternating-current impedance of the lithium-ion secondary battery in a frequency domain of 1 Hz to 0.01Hz is in a range of 40% to 80% of an alternating-current impedance in a frequency domain of 10000 Hz to 0.01 Hz.

**34.** The lithium-ion secondary battery of claim 33, wherein an alternating-current impedance of the lithium-ion secondary battery in a frequency domain of 1 Hz to 0.01Hz is in a range of 60% to 70% of an alternating-current impedance in a frequency domain of 10000 Hz to 0.01 Hz.

**35.** The lithium-ion secondary battery of claim 27, wherein the novel composite lithium salt comprises at least one of the compounds as shown in formal (II-2), formal (II-3), formal (II-4), formal (II-5) or formal (II-6),

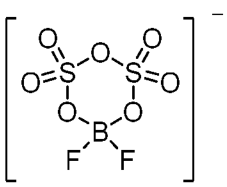

(II-2),

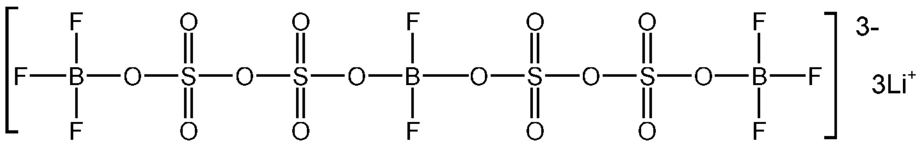

(II-3),

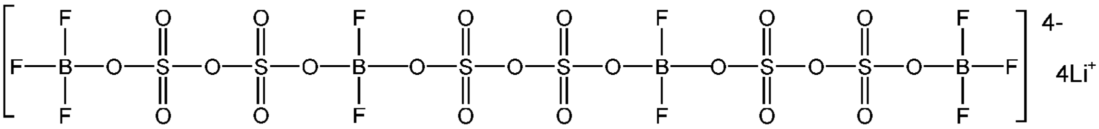

(II-4),

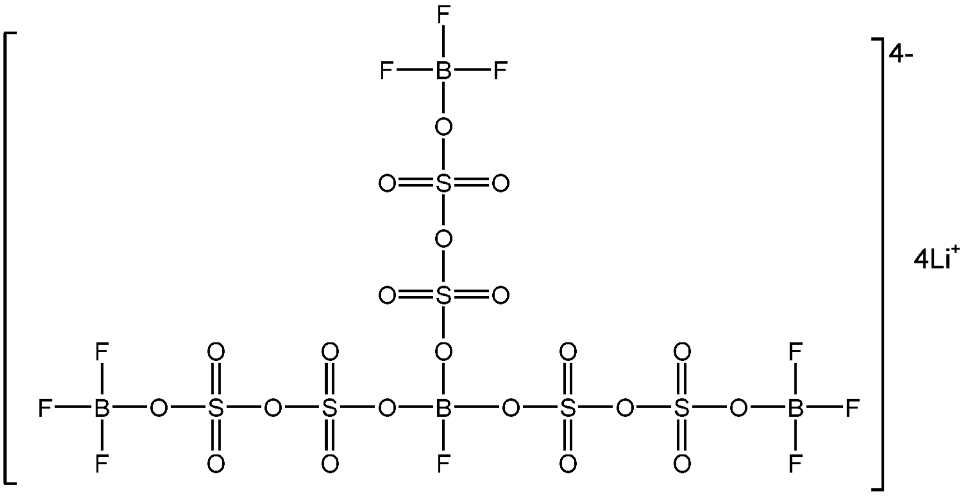

(II-5),

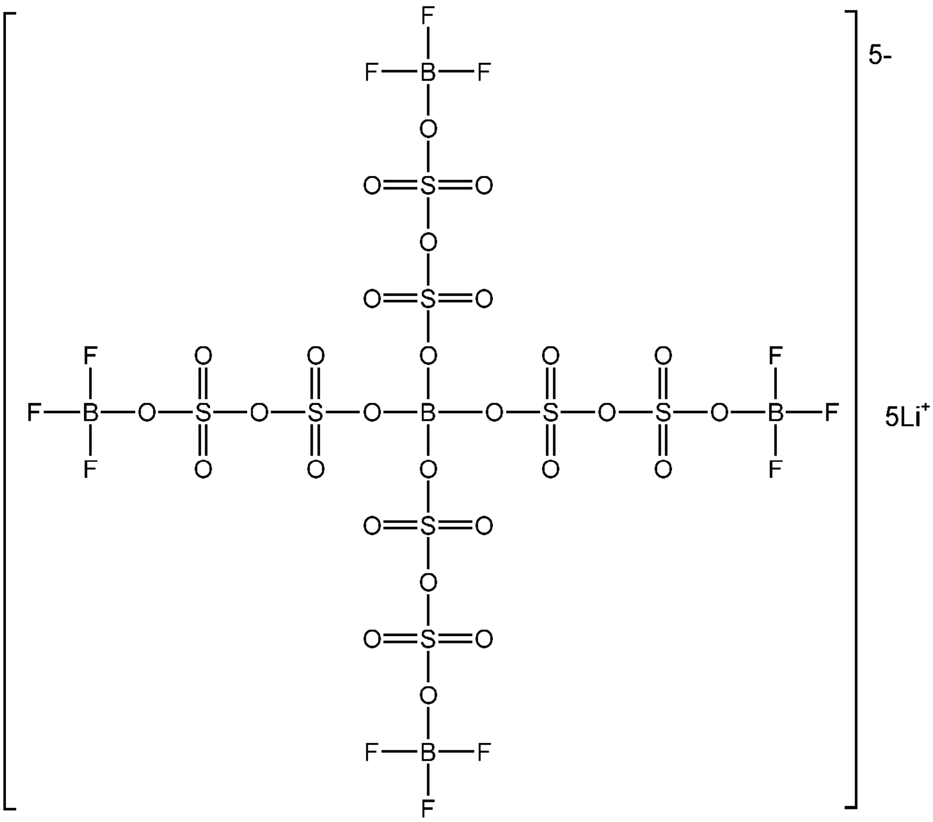

(II-6),

and the novel composite lithium salt comprises at least 80 wt% of the pyrosulfate-boron trifluoride composite lithium

salt as shown in the formula (II-1).

**36.** The lithium-ion secondary battery of claim 35, wherein the novel composite lithium salt comprises 80.0 wt% to 95.0 wt% of the pyrosulfate-boron trifluoride composite lithium salt as shown in the formula (II-1), and the compounds as shown in at least one of formal (II-2), formal (II-3), formal (II-4), formal (II-5) or formula (II-6) make up the rest.

**37.** The lithium-ion secondary battery of claim 27, wherein the additive further comprises a fundamental additive, wherein the fundamental additive is selected from the group consisting of vinylene carbonate, fluorinated vinyl carbonate, vinyl ethylene carbonate, tris(trimethylsilyl) phosphate, 1,3-propanesultone, 1,3-propanesultone, vinyl sulfate, lithium difluorophosphate, lithium bi(fluorosulfonyl)imide, succinic anhydride, adiponitrile, cyclohexylbenzene, lithium bis(difluoro-oxalate)phosphate, lithium bifluorooxalate borate, and any combination thereof, and a mass percent of any one of the fundamental additives in the electrolyte solution is in a range of 0.1 wt% to 5.0 wt%.

**38.** The lithium-ion secondary battery of claim 27, wherein the main lithium salt is selected from the group consisting of lithium hexafluorophosphate, lithium tetrafluoroborate, lithium hexafluoroarsenate, lithium perchlorate, lithium bis(oxalate)borate, lithium difluoro(oxalate)borate, lithium bi(fluorosulfonyl)imide, lithium bis(trifluoromethylsulfonyl) imide, lithium tetrafluorooxalate phosphate, lithium trioxalate phosphate, lithium difluorobis(oxalato)phosphate, and any combination thereof, and a molar concentration of the main lithium salt is in a range of 0.1 mol/L to 4.0 mol/L.

**39.** The lithium-ion secondary battery of claim 27, wherein the non-aqueous solvent is selected from $C_3$-$C_6$ carbonate compounds, $C_3$-$C_8$ carboxylic ester compounds, sulphone compounds, ether compounds, nitrile compounds, and any combination thereof;

the $C_3$-$C_6$ carbonate compounds are selected from the group consisting of vinyl carbonate, propylene carbonate, butylene carbonate, dimethyl carbonate, ethylmethyl carbonate, diethyl carbonate, methyl-2,2,2-trifluroethyl-, and any combination thereof;
the $C_3$-$C_8$ carboxylic ester compounds are selected from the group consisting of γ-butyrolactone, methyl acetate, methyl propionate, methyl butyrate, ethyl acetate, ethyl propionate, ethyl butyrate, propyl acetate, propyl propionate, 2,2-difluoroethyl acetate, and any combination thereof;
the sulphone compounds are selected from the group consisting of cyclobutyl sulfone, dimethyl sulfoxide, dimethyl sulfone, diethyl sulfone, and any combination thereof;
the ether compounds are selected from the group consisting of triethylene glycol dimethyl ether, tetraethylene glycol dimethyl ether, and any combination thereof; and
the nitrile compounds are selected from the group consisting of acetonitrile, butanedinitrile, adiponitrile, 1,3,6-hexanetrinitrile, p-fluorobenzonitrile, 1,2-bis(cyanoethoxy)ethane, and any combination thereof.

**40.** The lithium-ion secondary battery of claim 27, wherein the active material of the positive electrode is selected from the group consisting of lithium nickel-cobalt manganese oxide, lithium nickel-cobalt aluminate, lithium cobalt oxide, lithium nickel oxide, layered lithium manganese, spinel-type lithium manganese, lithium nickel manganese oxide, and any combination thereof.

**41.** The lithium-ion secondary battery of any one of claims 27 to 40, wherein when the lithium-ion secondary battery is charged under conditions of a charge rate in a range of 1 C to 6 C and a cut-off voltage in a range of 4.2 V to 5.0 V, a constant current charging ratio of the lithium-ion secondary battery is greater than or equal to 75%.

**42.** The lithium-ion secondary battery of claim 41, wherein when the lithium-ion secondary battery is charged under conditions of the charge rate in a range of 2 C to 4 C and the cut-off voltage in a range of 4.25 V to 4.45 V, the constant current charging ratio of the lithium-ion secondary battery is greater than or equal to 90%.

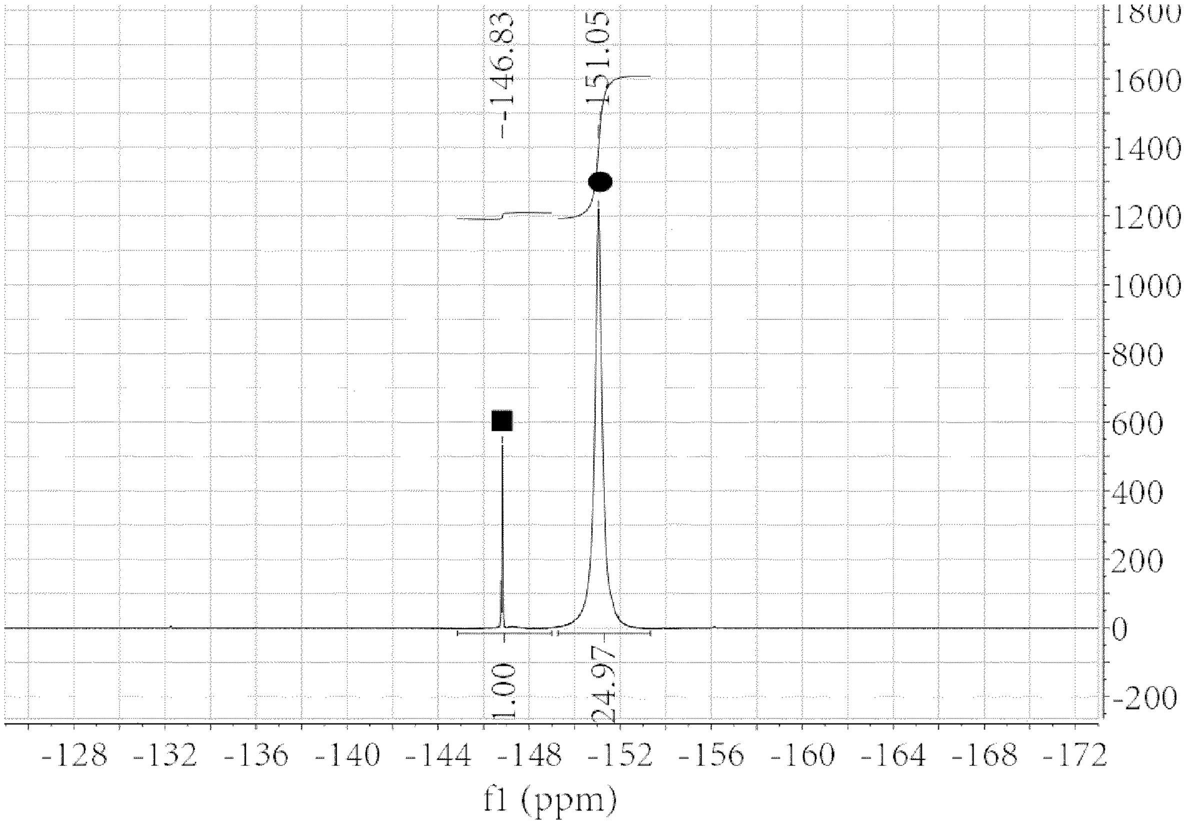

-146.83
-151.05
1800
1600
1400
1200
1000
800
600
400
200
0
-200
1.00
24.97
-128 -132 -136 -140 -144 -148 -152 -156 -160 -164 -168 -172
f1 (ppm)


FIG. 1

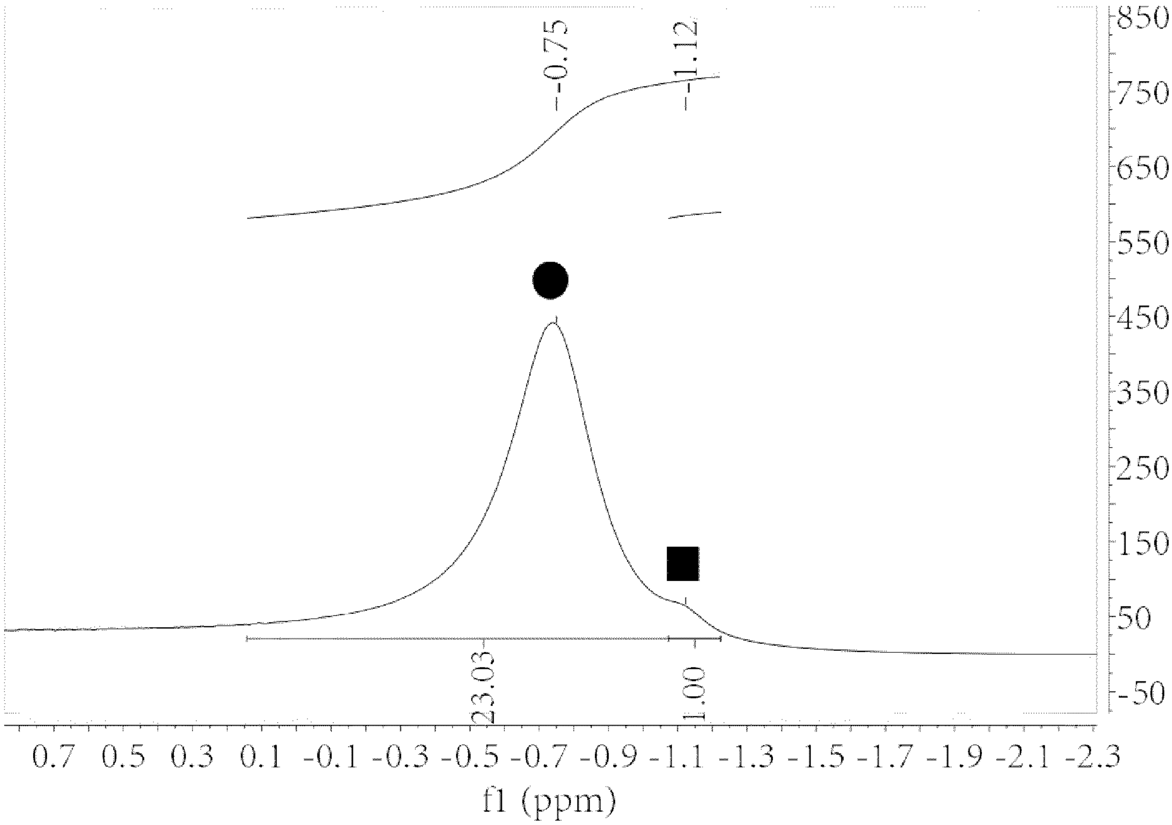

-0.75
-1.12
850
750
650
550
450
350
250
150
50
-50
23.03
1.00
0.7 0.5 0.3 0.1 -0.1 -0.3 -0.5 -0.7 -0.9 -1.1 -1.3 -1.5 -1.7 -1.9 -2.1 -2.3
f1 (ppm)


FIG. 2

**INTERNATIONAL SEARCH REPORT**

International application No.
**PCT/CN2023/135345**

**A. CLASSIFICATION OF SUBJECT MATTER**

H01M10/0567(2010.01)i； C07F5/02(2006.01)i

According to International Patent Classification (IPC) or to both national classification and IPC

**B. FIELDS SEARCHED**

Minimum documentation searched (classification system followed by classification symbols)

IPC:H01M, C07F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电解液, 电解质, 添加剂, 焦硫酸, 环, 硫酸, 含硫, 氟化, 硼, cell, battery, electrolyte, additive, pyrosulfuric, disulfuric, cycl+, +sulfur+, fluoride, fulor+, boron

**C. DOCUMENTS CONSIDERED TO BE RELEVANT**

| Category* | Citation of document, with indication, where appropriate, of the relevant passages | Relevant to claim No. |
|---|---|---|
| E | CN 117510528 A (XIANGHE KUNLUN NEW ENERGY MATERIAL CO., LTD.) 06 February 2024 (2024-02-06)<br>description, paragraphs 5-86 | 1-3, 11, 12 |
| A | CN 111029653 A (DONGGUAN SHANSHAN BATTERY MATERIALS CO., LTD. et al.) 17 April 2020 (2020-04-17)<br>description, paragraphs 6-28 | 1-42 |
| A | CN 107293782 A (NINGDE AMPEREX TECHNOLOGY LTD.) 24 October 2017 (2017-10-24)<br>entire document | 1-42 |
| A | CN 114649571 A (BEIJING WELION NEW ENERGY TECHNOLOGY CO., LTD.) 21 June 2022 (2022-06-21)<br>entire document | 1-42 |
| A | CN 112652817 A (WU CUIYUN) 13 April 2021 (2021-04-13)<br>entire document | 1-42 |
| A | CN 109659618 A (SOUND GROUP CO., LTD. et al.) 19 April 2019 (2019-04-19)<br>entire document | 1-42 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 February 2024** | **26 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

## INTERNATIONAL SEARCH REPORT

International application No.
**PCT/CN2023/135345**

### C. DOCUMENTS CONSIDERED TO BE RELEVANT

| Category* | Citation of document, with indication, where appropriate, of the relevant passages | Relevant to claim No. |
|---|---|---|
| A | CN 110265716 A (DONGGUAN WEIKE BATTERY CO., LTD.) 20 September 2019 (2019-09-20) entire document | 1-42 |
| A | CN 107799822 A (ZHUHAI SMOOTHWAY ELECTRONIC MATERIALS CO., LTD.) 13 March 2018 (2018-03-13) entire document | 1-42 |
| A | JP 2005026091 A (YUASA BATTERY CO., LTD.) 27 January 2005 (2005-01-27) entire document | 1-42 |
| A | JP 2018172266 A (MITSUI CHEMICALS INC.) 08 November 2018 (2018-11-08) entire document | 1-42 |

Form PCT/ISA/210 (second sheet) (July 2022)

**INTERNATIONAL SEARCH REPORT**
**Information on patent family members**

International application No.
**PCT/CN2023/135345**

| Patent document cited in search report | Publication date (day/month/year) | Patent family member(s) | Publication date (day/month/year) |
|---|---|---|---|
| CN 117510528 A | 06 February 2024 | None | |
| CN 111029653 A | 17 April 2020 | None | |
| CN 107293782 A | 24 October 2017 | None | |
| CN 114649571 A | 21 June 2022 | None | |
| CN 112652817 A | 13 April 2021 | None | |
| CN 109659618 A | 19 April 2019 | None | |
| CN 110265716 A | 20 September 2019 | None | |
| CN 107799822 A | 13 March 2018 | None | |
| JP 2005026091 A | 27 January 2005 | JP 4258711 B2 | 30 April 2009 |
| JP 2018172266 A | 08 November 2018 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211375099
- CN 202211583064X